(19) Europäisches Patentamt / European Patent Office / Office européen des brevets

(11) EP 3 599 239 A1

(12) **EUROPEAN PATENT APPLICATION**

(43) Date of publication:
**29.01.2020 Bulletin 2020/05**

(21) Application number: **18185301.1**

(22) Date of filing: **24.07.2018**

(51) Int Cl.:
*C07F 5/02* (2006.01) *B01J 20/22* (2006.01)
*G01N 33/00* (2006.01) *G01N 21/00* (2006.01)
*G01N 33/18* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ecole Polytechnique Federale De Lausanne (EPFL) EPFL-TTO**
**1015 Lausanne (CH)**

(72) Inventors:
- **STYLIANOU, Kyriakos**
  **1950 Sion (CH)**
- **SMIT, Berend**
  **1025 St-Sulpice (CH)**
- **EBRAHIM, Fatmah**
  **1950 Sion (CH)**
- **NGUYEN, Ngoc Tu**
  **1950 Sion (CH)**
- **SHYSHKANOV, Serhii**
  **1006 Lausanne (CH)**
- **DYSON, Paul**
  **1024 Ecublens (CH)**

(74) Representative: **KATZAROV S.A.**
**European Patent Attorneys**
**12, Avenue des Morgines**
**1213 Petit-Lancy (CH)**

# (54) METAL ORGANIC FRAMEWORKS AND METHODS FOR USING THEREOF

(57) The invention features metal-organic frameworks (MOFs) having a crystalline lattice comprising metallic nodes and organic ligands, wherein each organic ligand comprises a Lewis acidic or basic centre bound to N conjugated systems, wherein N is comprised between 2 and 5; said metallic nodes consist of metal ions or metal clusters located at the vertices of the crystalline lattice and coordinating said plurality of organic ligands; and said metallic nodes comprise metals of the rare-earth series.

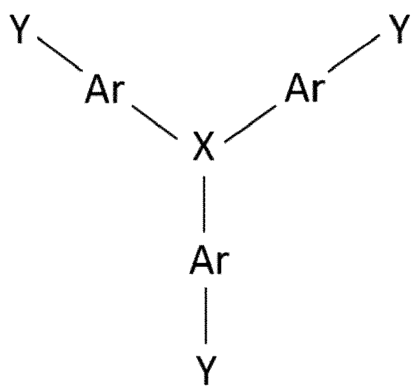

(I)

EP 3 599 239 A1

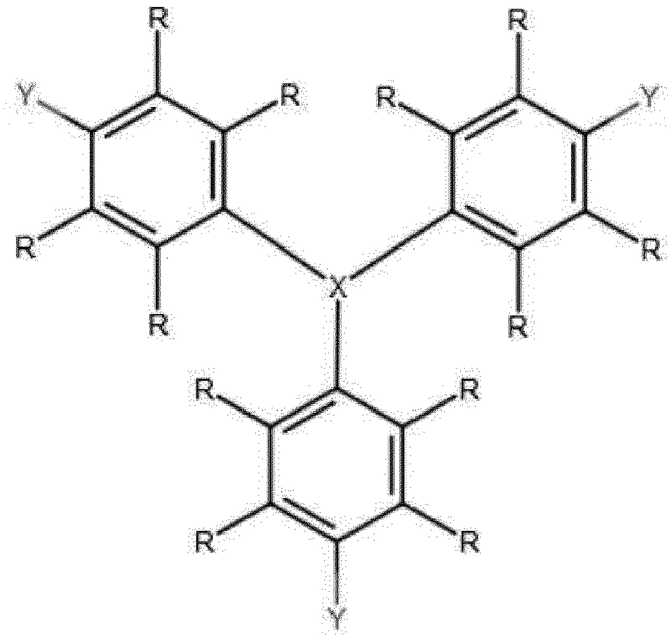

(II)

## Description

### Technical Field

The present invention belongs to the field of materials science, and particularly to metal organic frameworks (MOFs) and their uses.

### Background Art

Metal organic frameworks (MOFs) are crystalline materials prepared by the self-assembly of metal ions or clusters with organic bridging ligands to form porous extended structures. MOFs are characterized by high porosity, with some of them possessing the highest pore volume and surface area, and lowest crystal density among all materials known to date. The immense choice of metal ions or clusters and ligands offers vast opportunities to rationally design and synthesize MOFs with specific functionalities for targeted applications in areas of gas storage and separation, catalysis, sensing, non-linear optics, ferroelectricity, magnetism, and conductivity.

Ion sensing, and particularly the sensing of fluoride ions, has attracted growing attention in the last years because of its great potential for industrial and biological applications, and because of the health risks related to chronic fluoride overconsumption, including various forms of fluorosis and neurotoxicity. In this context, several types of devices and sensors have been developed to date.

Aside from the complicated and expensive methods of ion chromatography, capillary ion electrophoresis, and flow injection, there exist several, relatively cheap and commercially available potentiometric fluoride sensors, with three-electrode configurations consisting of a working electrode, a reference electrode, and a temperature probe. Potentiometric determination of the fluoride concentration is analogous to a pH measurement. Instead of a glass diaphragm, a $LaF_3$ single crystal is used, which enables selective penetration of fluoride ions into the working electrode. Here, the concentration-dependent potential is measured against the reference electrode as voltage, and analysed in a similar way to a pH measurement.

While these instruments are self-contained and, in some cases even portable, the measurement process often consists of multiple complex steps, and requires the use of external lab equipment in order to correctly prepare samples, making on-site water analysis impractical. For instance, the working electrode must be placed in a calibration solution for approximately three hours before use; probes must be rinsed with deionized water before being immersed in a 20-40 mL of a 50/50 mixture of a purchased calibration solution and the sample to be tested; and the signal takes 15-20 minutes to stabilize, during which the sample solution must be continuously agitated using a magnetic stirrer.

Other widely used methods are colorimetric, and based on the chemical leaching of dyes in the presence of fluoride in aqueous solutions. The most commonly employed of these is based on the colour bleaching of a bright red zirconyl-2-(4-sulphophenyloazo)-1,8-dihydroxy-3,6-napthalene-disulphonic acid (SPADNS) complex, which has a linear analytical range of 0 to 1.4 mg/L for fluoride. While this method has recently been integrated into a convenient, portable device for on-site water sampling, its efficacy is somewhat limited by relatively low accuracy and interfering signals. Interferences for the SPADNS method arise due to chlorides, calcium, iron, phosphates and high concentrations of sulphates; the presence of interfering compounds necessitates a preliminary distillation step.

At the research level, the majority of fluoride chemosensors are based on one of three principles: the cleavage of Si-O bonds, the formation of H···F bonds, and coordination to Lewis-acidic binding sites. Some of the most commonly exploited Lewis acids for fluoride detection include boron compounds. In particular, the empty p-orbital in the intrinsically electron-deficient boron makes covalent, three-coordinated boron compounds possessing only 6 valence electrons, exceptional Lewis acids, owing to their propensity to undergo reactions that serve to fill their valence shell. This behaviour of Lewis-acidic binding sites, as well as the metal-organic framework concept, has led to some interesting and promising strategies for ion sensing and possibly selective sequestration.

For instance, Yamaguchi et al. (J. Am. Chem. Soc. 2001, 123, 11372-11375) reported the production of a colorimetric fluoride sensor based on boron-containing $\pi$-electron systems.

Yang et al. (Anal. Chem. 2017, 89, 1930-1936) disclosed lanthanide metal-organic frameworks having a dual-fluorescence emission for the determination of fluoride ions prepared with 5-boronoisophthalic acid (5-bop) and $Eu^{3+}$ ions as the precursors.

WO2016/162810 discloses an electron deficient boron based conjugated microporous polymer (BCMP) comprising a polymeric network of triarylborane and organic linkers, wherein the triarylborane is attached with the organic linkers.

All the above-cited technologies have some major drawbacks, such as limited accuracy, limited sensitivity, slow response or, in the case of MOFs, irreversibility of chemical reactions that leads to a structural disintegration upon ion binding, thus rendering a MOF-based ion sensor not recyclable.

## Summary of the invention

According to one aspect of the present invention, it is provided a metal-organic framework (MOF) having a crystalline lattice comprising metallic nodes and organic ligands, wherein:

a) each organic ligand comprises a Lewis acidic or basic centre bound to N conjugated systems, wherein N is comprised between 2 and 5;
b) said metallic nodes consist of metal ions or metal clusters located at the vertices of the crystalline lattice and coordinating said plurality of organic ligands; and
c) said metallic nodes comprise metals of the rare-earth series.

In one embodiment, the organic ligand is of formula (I):

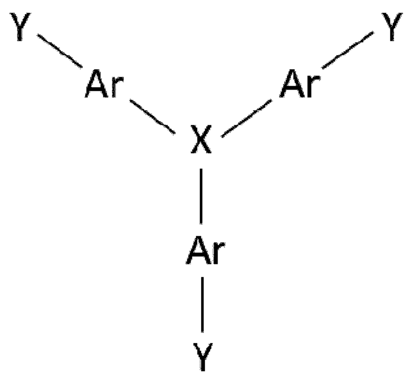

(I)

wherein

X is selected from a group comprising B, Sn, Sb, Si, C, P and N;
each Y is independently selected from a group comprising Br, -COOH,-$NH_2$, -$PO_3H$, - $SO_3H$, -OH and -pyridine; and each Ar connecting X and Y is a substituted or unsubstituted aryl moiety. According to another aspect of the present invention, it is provided a compound of formula (I):

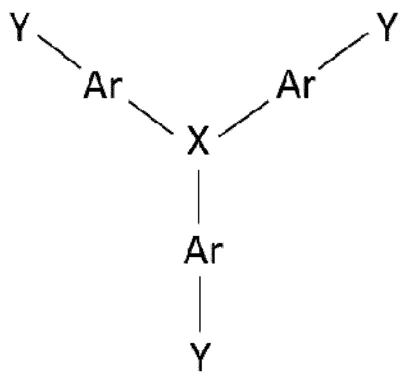

(I)

wherein

X is selected from a group comprising B, Sn, Sb, Si, C, P and N;
each Y is independently selected from a group comprising Br, -COOH,-$NH_2$, -$PO_3H$, - $SO_3H$, -OH and -pyridine; and each Ar connecting X and Y is a substituted or unsubstituted aryl moiety.

Another aspect of the present invention relates to the use of a compound as previously disclosed in the production of a metal-organic framework (MOF).

Still another aspect of the present invention relates to a process for the production of a metal-organic framework (MOF), comprising the steps of:

a) providing organic ligands comprising a Lewis acidic or basic centre bound to N conjugated systems, wherein N is comprised between 2 and 5; and
b) contacting said organic ligands with a compound comprising metals of the rare-earth series, under conditions allowing to obtain a metal-organic framework according to the invention.

Still another aspect of the present invention relates to the use of a metal-organic framework according to the invention for ion sensing.
In one embodiment, the sensed ion is Fluoride ion ($F^-$).
Still another aspect of the present invention relates to an ion sensor, said sensor comprising a metal-organic framework according to the invention.
Still another aspect of the present invention relates to a kit comprising an ion sensor according to the present invention.
Still another aspect of the present invention relates to a fluorometer device comprising:

a) means for providing a source of an electromagnetic radiation;
b) an element comprising a metal-organic framework according to the present invention, said element being operatively connected with said means for providing a source of an electromagnetic radiation; and
c) means for detecting and analysing an electromagnetic radiation, operatively connected with both a) and b).

Still a further aspect of the present invention relates to a method for ion sensing, comprising:

a) providing an ion sensor or a fluorometer device according to the present invention;
b) contacting a metal-organic framework according to the invention comprised within said sensor or device with a sample comprising an ion to be sensed;
c) irradiating said metal-organic framework with a source of electromagnetic radiation under conditions to obtain a light emission;
d) detecting and analysing said light emission; and
e) comparing said light emission with a light emission obtained in the absence of a sample comprising an ion to be sensed, wherein a difference in light emission is indicative of the presence of a sensed ion.

In one embodiment of the invention, the sensed ion is Fluoride ion ($F^-$).
In a particular embodiment, the above method further comprises a step f) of removing the sample and cleaning the ion sensor, thereby regenerating said sensor.
The above and other objects, features and advantages of the herein presented subject-matter will become more apparent from a study of the following description with reference to the attached figures showing some preferred aspects of said subject-matter. However, the present invention is not limited to the embodiments as described in the following and/or depicted in the drawings; to the contrary, the scope of the present invention is defined by the appended claims.

## Brief description of drawings

In the Figures:

Figure 1 shows a three-dimensional image of a portion of a MOF according to one aspect of the invention, as well as its turn-off mechanism in the frame of ions (e.g. $F^-$) detection;
Figure 2a shows a graph of the linear quenching response in the concentration range of 0 - 2 ppm of a MOF according to one aspect of the invention included into a ion sensor; Figure 2b shows an analysis of the non-linear Stern-Volmer plot, revealing a combination of static and dynamic quenching mechanisms;
Figure 3a shows X-ray Photoelectron Spectroscopy (XPS) spectra of as-made and $F^-$-treated SION-105, confirming the weak nature of the interaction between a MOF according to one aspect of the invention and Fluoride ions;
Figure 3b shows a schematic, three-dimensional view of one MOF monomer according to one aspect of the invention comprising Boron as Lewis acidic centre, while been contacted by a Fluoride anion;
Figure 3c shows PXRD spectra of a MOF according to one aspect of the invention after exposure to aqueous solutions of several ions, with preservation of the crystal structure, and regeneration of the $Eu^{III}$ luminescence and the functionality of the MOF after washing in ethanol flushes, confirming reversibility of an ion sensor implementing

a MOF of the invention;

Figure 4a shows a miniaturized fluorometer device comprising a MOF according to one aspect of the invention, useful as a robust and portable tool for water sampling; Figure 4b shows a readout of voltage changes across the photodiode that occur in response to the addition of F-, as the corresponding F- concentration;

Figure 5 shows some non-limiting examples of ligands or compounds according to the invention, named L1-L7;

Figure 6 shows some non-limiting examples of MOFs according to the invention.

## Detailed description of the invention

The subject-matter herein described will be clarified in the following by means of the following description of those aspects which are depicted in the drawings. It is however to be understood that the subject matter described in this specification is not limited to the aspects described in the following and depicted in the drawings; to the contrary, the scope of the subject-matter herein described is defined by the claims. Moreover, it is to be understood that the specific conditions or parameters described and/or shown in the following are not limiting of the subject-matter herein described, and that the terminology used herein is for the purpose of describing particular aspects by way of example only and is not intended to be limiting.

Unless defined otherwise, technical and scientific terms used herein have the same meaning as commonly understood by one of ordinary skill in the art to which this invention belongs. Further, unless otherwise required by the context, singular terms shall include pluralities and plural terms shall include the singular. The methods and techniques of the present disclosure are generally performed according to conventional methods well known in the art and as described in various general and more specific references that are cited and discussed throughout the present specification unless otherwise indicated. Further, for the sake of clarity, the use of the term "about" is herein intended to encompass a variation of +/- 10% of a given value. As used herein, the term "moiety" can be interchangeably used to mean "chemical group".

The following description will be better understood by means of the following definitions.

As used in the following and in the appended claims, the singular forms "a", "an" and "the" include plural referents unless the context clearly dictates otherwise. Also, the use of "or" means "and/or" unless stated otherwise. Similarly, "comprise", "comprises", "comprising", "include", "includes" and "including" are interchangeable and not intended to be limiting. It is to be further understood that where for the description of various embodiments use is made of the term "comprising", those skilled in the art will understand that in some specific instances, an embodiment can be alternatively described using language "consisting essentially of' or "consisting of."

The expression "metal-organic frameworks" or "MOFs" refers to compounds consisting polymeric crystalline structures of metal ions or clusters coordinated to organic compounds to form one-, two-, or three-dimensional structures. Metal-organic frameworks are a subclass of coordination polymers, network structures containing metal ion centres (also known as "nodes") linked by repeating coordination entities (organic compounds) extending in 1, 2, or 3 dimensions named "ligands" or "linkers", with the special feature that they are often porous, i.e. they contain potential voids.

The organic units are typically mono-, di-, tri-, or tetravalent ligands. The choice of metal and linker dictates the structure and hence properties of the MOF. For example, the metal's coordination preference influences the size and shape of pores by dictating how many ligands can bind to the metal and in which orientation.

Because of this property, MOFs are of interest for the storage of gases such as hydrogen and carbon dioxide. Other possible applications of MOFs are in gas purification, in gas separation, in catalysis, as sensors and as supercapacitors.

The term "metal cluster" refers to an ensemble of bound metal atoms or molecules that is intermediate in size between a molecule and a bulk solid. Atomic clusters can be either pure, i.e. formed from a single atomic metallic species, or mixed, formed from a mixed atomic metallic species, and can be classified for instance by the nature of their atomic count ("micro" < 20, "small" < 100 < "large"). Molecular clusters are aggregates of 5-$10^5$ molecular units; particularly, metallic clusters have long range valence electron sharing (over many successive adjacent atoms) and are partially directional.

In the frame of the present disclosure, metals are preferably rare-earth elements (fifteen lanthanides, as well as scandium (Sc) and yttrium (Y)), and even more preferably metals of the lanthanide series - cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), terbium (Tb), thulium (Tm) and ytterbium (Yb). In one aspect, a metal according to the present invention is europium (Eu), particularly trivalent europium Eu(III). In one aspect, a metal cluster according to the present invention is a europium ionic dimer Eu(III)-Eu(III). Any combination of the foregoing metals as/within MOFs' metallic ions or clusters can be envisaged.

A "Lewis acid" is a chemical species that contains an empty orbital which is capable of accepting an electron pair (i.e., an electrophile) from a Lewis base to form a Lewis adduct. When bonding with a base, the acid uses its lowest unoccupied molecular orbital or "LUMO". Various species can act as Lewis acids: generally speaking, all metal cations

are Lewis acids since they are able to accept electrons (e.g., $Cu^{2+}$, $Fe^{2+}$, $Fe^{3+}$ and the like); an atom, ion, or molecule with an incomplete octet of electrons can act as a Lewis acid (e.g., $BF_3$, $AlF_3$); molecules where the central atom can have more than 8 valence shell electrons can be electron acceptors, and thus are classified as Lewis acids (e.g., $SiBr_4$, $SiF_4$); or molecules that have multiple bonds between two atoms of different electronegativities (e.g. $SO_2$).

A "Lewis base" is any nucleophilic species that has a filled orbital containing an electron pair which is not involved in bonding but may form a dative bond with a Lewis acid to form a so-called "Lewis adduct". When bonding with an acid, Lewis bases utilize the highest occupied molecular orbital or "HOMO". In a Lewis adduct, the Lewis acid and base share an electron pair furnished by the Lewis base, forming a dative, or coordinating, bond.

As used herein, a "Lewis acidic centre" means an atom, ion, or moiety bond with organic ligands as herein described and acting as a Lewis acid. Accordingly, a "Lewis basic centre" means an atom, ion, or moiety bond with organic ligands as herein described and acting as a Lewis base.

A "conjugated system" is a system of atoms covalently bonded with alternating single and multiple (e.g. double) bonds (e.g., C=C-C=C-C) in a molecule of an organic compound so to have connected p-orbitals. Conjugation is the overlap of one p-orbital with another across an intervening $\sigma$ bond. This system results in a general delocalization of the electrons across all of the adjacent parallel aligned p-orbitals of the atoms, which increases stability and thereby lowers the overall energy of the molecule. The electron delocalisation creates a region where electrons do not belong to a single bond or atom, but rather to a group of atoms.

"Alkyl" means an aliphatic saturated hydrocarbon moiety, with the general formula of $C_nH_{2n+1}$, which may be straight or branched having about 1 to about 25 carbon atoms in the chain. Preferred alkyl moieties have 1 to about 20, more preferred 1 to about 12, carbon atoms in the chain. Branched means that one or more lower alkyl moieties such as methyl, ethyl or propyl are attached to a linear alkyl chain. "Lower alkyl" means about 1 to about 4 carbon atoms in the chain that may be straight or branched. "Substituted alkyl" means an alkyl moiety as defined above which is substituted with one or more "aliphatic moiety substituents" (preferably 1 to 3) which may be the same or different, and are as defined herein. Alkyl moieties may contain 1 to 5 heteroatoms as defined herein. Substituted alkyl moieties may contain 1 to 5 heteroatoms as defined herein. In a substituted alkyl moiety, one or more heteroatoms may be adjacent to a chain atom bearing an aliphatic moiety substituent as defined herein. In an alkyl moiety, a heteroatom may bear an aliphatic moiety substituent as defined herein.

"Aliphatic" means acyclic organic compounds including alkyl, alkenyl or alkynyl as defined herein.

"Aliphatic moiety substituent(s)" mean substituents attached to an aliphatic moiety as defined herein inclusive of aryl, heteroaryl, hydroxy, alkoxy, cyclyloxy, aryloxy, heteroaryloxy, acyl or its thioxo analogue, cyclylcarbonyl or its thioxo analogue, aroyl or its thioxo analogue, heteroaroyl or its thioxo analogue, acyloxy, cyclylcarbonyloxy, aroyloxy, heteroaroyloxy, halo, nitro, cyano, carboxy (acid), -C(=O)-NHOH, -C(=O)-$CH_2$OH, -C(=O)-$CH_2$SH,-C(=O)-NH-CN, sulpho, phosphono, alkylsulphonylcarbamoyl, tetrazolyl, arylsulphonylcarbamoyl, N-methoxycarbamoyl, heteroarylsulphonylcarbamoyl, 3-hydroxy-3-cyclobutene-1,2-dione, 3,5-dioxo-1,2,4-oxadiazolidinyl or hydroxyheteroaryl such as 3-hydroxyisoxazolyl, 3-hydoxy-1-methylpyrazolyl, alkoxycarbonyl, cyclyloxycarbonyl, aryloxycarbonyl, heteroaryloxycarbonyl, alkylsulfonyl, cyclylsulfonyl, arylsulfonyl, heteroarylsulfonyl, alkylsulfinyl, cyclylsulfinyl, arylsulfinyl, heteroarylsulfinyl, alkylthio, cyclylthio, arylthio, heteroarylthio, cyclyl, aryldiazo, heteroaryldiazo, thiol, methylene ($H_2$C=), oxo (O=), thioxo (S=). Acidic/amide aliphatic moiety substituents are carboxy (acid), -C(=O)-NHOH, -C(=O)-$CH_2$OH, -C(=O)-$CH_2$SH, -C(=O)-NH-CN, sulpho, phosphono, alkylsulphonylcarbamoyl, tetrazolyl, arylsulphonylcarbamoyl, N-methoxycarbamoyl, heteroarylsulphonylcarbamoyl, 3-hydroxy-3-cyclobutene-1,2-dione, 3,5-dioxo-1,2,4-oxadiazolidinyl or hydroxyheteroaryl such as 3-hydroxyisoxazolyl, 3-hydoxy-1-methylpyrazolyl. Non-acidic polar aliphatic moiety substituents are hydroxy, oxo (O=), thioxo (S=), acyl or its thioxo analogue, cyclylcarbonyl or its thioxo analogue, aroyl or its thioxo analogue, heteroaroyl or its thioxo analogue, alkoxycarbonyl, cyclyloxycarbonyl, aryloxycarbonyl, heteroaryloxycarbonyl, acyloxy, cyclylcarbonyloxy, aroyloxy, heteroaroyloxy, alkylsulfonyl, cyclylsulfonyl, arylsulfonyl, heteroarylsulfonyl, alkylsulfinyl, cyclylsulfinyl, arylsulfinyl, heteroarylsulfinyl, thiol. Exemplary aliphatic moieties bearing an aliphatic moiety substituent include methoxymethoxy, methoxyethoxy, ethoxyethoxy, (methoxy-, benzyloxy-, phenoxy-, ethoxy-, or propyloxy-)carbonyl(methyl, ethyl, or ethyl), (methoxy-, benzyloxy-, phenoxy-, ethoxy-, or propyloxy-)carbonyl, (methyl, ethyl, or propyl)aminocarbonyl(nethyl, ethyl, or propyl), (methyl, ethyl, or propyl)aminocarbonyl, pyridylmethyloxy-carbonylmethyl, methoxyethyl, ethoxymethyl, n-butoxymethyl, cyclopentylmethyloxyethyl, phenoxypropyl, phenoxyallyl, trifluoromethyl, cyclopropyl-methyl, cyclopentylmethyl, carboxy(methyl or ethyl), 2-phenethenyl, benzyloxy, 1- or 2-naphthyl-methoxy, 4-pyridyl-methyloxy, benzyloxyethyl, 3-benzyloxyallyl, 4-pyridylmethyloxyethyl, 4-pyridylmethyl-oxyallyl, benzyl, 2-phenethyl, naphthylmethyl, styryl, 4-phenyl-1,3-pentadienyl, phenylpropynyl, 3-phenylbut-2-ynyl, pyrid-3-ylacetylenyl and quinolin-3-ylacetylenyl, 4-pyridyl-ethynyl, 4-pyridylvinyl, thienylethenyl, pyridylethenyl, imidazolylethenyl, pyrazinylethenyl, pyridylpentenyl, pyridylhexenyl and pyridylheptenyl, thienylmethyl, pyridylmethyl, imidazolylmethyl, pyrazinylmethyl, tetrahydropyranylmethyl, tetrahydropyranyl-methyloxymethyl, and the like.

"Acyl" means an H-C(=O)- or (aliphatic or cyclyl)-C(=O)- moiety wherein the aliphatic moiety is as herein described. Preferred acyls contain a lower alkyl. Exemplary acyl moieties include formyl, acetyl, propanoyl, 2-methylpropanoyl, butanoyl, palmitoyl, acryloyl, propynoyl, cyclohexylcarbonyl, and the like.

"Acyloxy" means an H-C(=O)-O- or (aliphatic or cyclyl)-C(=O)-O moiety wherein the aliphatic moiety is as herein described. Preferred acyloxys contain a lower alkyl. Exemplary acyloxy moieties include acetoxy and propionyloxy, and the like.

"Alkenoyl" means an alkenyl-C(=O)- moiety wherein alkenyl is as defined herein.

"Alkenyl" means an aliphatic hydrocarbon moiety containing a carbon-carbon double bond and which may be straight or branched having about 2 to about 15 carbon atoms in the chain. Preferred alkenyl moieties have 2 to about 12 carbon atoms in the chain; and more preferably about 2 to about 4 carbon atoms in the chain. Branched means that one or more lower alkyl moieties such as methyl, ethyl or propyl are attached to a linear alkenyl chain. "Lower alkenyl" means about 2 to about 4 carbon atoms in the chain that may be straight or branched. Exemplary alkenyl moieties include ethenyl, propenyl, n-butenyl, i-butenyl, 3-methylbut-2-enyl, n-pentenyl, heptenyl, octenyl, cyclohexylbutenyl, decenyl, and the like. "Substituted alkenyl" means an alkenyl moiety as defined above which is substituted with one or more "aliphatic moiety substituents" (preferably 1 to 3) which may be the same or different and are as defined herein. Exemplary alkenyl alphatic moiety substituents include halo or cycloalkyl moieties. Alkenyl moieties may contain 1 to 5 heteroatoms as defined herein. Substituted alkenyl moieties may contain 1 to 5 heteroatoms as defined herein. In a substituted alkenyl moiety, one or more heteroatoms may be adjacent to a chain atom bearing an aliphatic moiety substituent as defined herein. In an alkenyl moiety, a heteroatom may bear an aliphatic moiety substituent as defined herein.

"Alkenyloxy" means an alkenyl-O- moiety wherein the alkenyl moiety is as herein described. Exemplary alkenyloxy moieties include allyloxy, 3-butenyloxy, and the like.

"Alkoxy" means an alkyl-O- moiety wherein the alkyl moiety is as herein described. Exemplary alkoxy moieties include methoxy, ethoxy, n-propoxy, i-propoxy, n-butoxy, heptoxy, and the like.

"Alkoxycarbonyl" means an alkyl-O-C(=O)- moiety, wherein the alkyl moiety is as herein defined. Exemplary alkoxycarbonyl moieties include methoxycarbonyl, ethoxycarbonyl, t-butyloxycarbonyl, and the like.

"Alkylsulfinyl" means an alkyl-SO- moiety wherein the alkyl moiety is as defined above. Preferred moieties are those wherein the alkyl moiety is lower alkyl.

"Alkylsulfonyl" means an alkyl-$SO_2$-moiety wherein the alkyl moiety is as defined above. Preferred moieties are those wherein the alkyl moiety is lower alkyl.

"Alkylsulphonylcarbamoyl" means an alkyl-$SO_2$-NH-C(=O)- moiety wherein the alkyl moiety is as herein described. Preferred alkylsulphonylcarbamoyl moieties are those wherein the alkyl moiety is lower alkyl.

"Alkylthio" means an alkyl-S- moiety wherein the alkyl moiety is as herein described. Exemplary alkylthio moieties include methylthio, ethylthio, i-propylthio and heptylthio.

"Alkynyl" means an aliphatic hydrocarbon moiety containing a carbon-carbon triple bond and which may be straight or branched having about 2 to about 15 carbon atoms in the chain. Preferred alkynyl moieties have 2 to about 12 carbon atoms in the chain; and more preferably about 2 to about 4 carbon atoms in the chain. Branched means that one or more lower alkyl moieties such as methyl, ethyl or propyl are attached to a linear alkynyl chain. "Lower alkynyl" means about 2 to about 4 carbon atoms in the chain that may be straight or branched. The alkynyl moiety may be substituted by one or more halo. Exemplary alkynyl moieties include ethynyl, propynyl, n-butynyl, 2-butynyl, 3-methylbutynyl, n-pentynyl, heptynyl, octynyl, decynyl, and the like. "Substituted alkynyl" means alkynyl as defined above which is substituted with one or more "aliphatic moiety substituents" (preferably 1 to 3) which may be the same or different, and are as defined herein.

"Aromatic moiety" means aryl or heteroaryl as defined herein. Exemplary aromatic moieties include phenyl, halo substituted phenyl, azaheteroaryl, and the like.

"Aroyl" means an aryl-C(=O)- moiety wherein the aryl moiety is as herein described. Exemplary aroyl moieties include benzoyl, 1- and 2-naphthoyl, and the like.

"Aroyloxy" means an aryl-C(=O)-O- moiety wherein the aryl moiety is as herein described.

"Aryl" means an aromatic monocyclic or multicyclic ring system of about 6 to about 14 carbon atoms, preferably of about 6 to about 10 carbon atoms. Encompassed by aryl are fused arylcycloalkenyl, fused arylcycloalkyl, fused arylheterocyclenyl and fused arylheterocyclyl as defined herein when bonded through the aryl moiety thereof. The aryl is optionally substituted with one or more "ring moiety substituents" which may be the same or different, and are as defined herein. Exemplary aryl moieties include phenyl or naphthyl, or phenyl substituted or naphthyl substituted. "Substituted aryl" means an aryl moiety as defined above which is substituted with one or more "ring moiety substituents" (preferably 1 to 3) which may be the same or different and are as defined herein.

"Aryloxy" means an aryl-O- moiety wherein the aryl moiety is as defined herein. Exemplary aryloxy moietymoieties include phenoxy and 2-naphthyloxy.

"Aryloxycarbonyl" means an aryl-O-C(=O)- moiety wherein the aryl moiety is as defined herein. Exemplary aryloxycarbonyl moietymoieties include phenoxycarbonyl and naphthoxycarbonyl.

"Arylsulfonyl" means an aryl-$SO_2$- moiety wherein the aryl moiety is as defined herein.

"Arylsulphonylcarbamoyl" means an aryl-$SO_2$-NH-C(=O)- moiety wherein the aryl moiety is as herein described.

An exemplary arylsulphonylcarbamoyl moiety is phenylsulphonylcarbamoyl.

"Arylsulfinyl" means an aryl-SO- moiety wherein the aryl moiety is as defined herein.

"Arylthio" means an aryl-S- moiety wherein the aryl moiety is as herein described. Exemplary arylthio moieties include phenylthio and naphthylthio.

"Carboxy" means an HO(O=)C- (carboxylic acid) moiety.

"Cycloalkenyl" means a non-aromatic mono- or multicyclic ring system of about 3 to about 10 carbon atoms, preferably of about 5 to about 10 carbon atoms, and which contains at least one carbon-carbon double bond. Encompassed by cycloalkenyl are fused arylcycloalkenyl and fused heteroarylcycloalkenyl as defined herein when bonded through the cycloalkenyl moiety thereof. Preferred ring sizes of rings of the ring system include about 5 to about 6 ring atoms; and such preferred ring sizes are also referred to as "lower". "Substituted cycloalkenyl" means an cycloalkyenyl moiety as defined above which is substituted with one or more "ring moiety substituents" (preferably 1 to 3) which may be the same or different and are as defined herein. Exemplary monocyclic cycloalkenyl include cyclopentenyl, cyclohexenyl, cycloheptenyl, and the like. An exemplary multicyclic cycloalkenyl is norbornylenyl.

"Cycloalkyl" means a non-aromatic mono- or multicyclic ring system of about 3 to about 10 carbon atoms, preferably of about 5 to about 10 carbon atoms. Preferred ring sizes of rings of the ring system include about 5 to about 6 ring atoms; and such preferred ring sizes are also referred to as "lower". "Substituted cycloalkyl" means a cycloalkyl moiety as defined above which is substituted with one or more "ring moiety substituents" (preferably 1 to 3) which may be the same or different and are as defined herein. Exemplary monocyclic cycloalkyl include cyclopentyl, cyclohexyl, cycloheptyl, and the like. Exemplary multicyclic cycloalkyl include 1 -decalin, norbornyl, adamant-(1- or 2-)yl, and the like.

"Cyclic" or "Cyclyl" means cycloalkyl, cycloalkenyl, heterocyclyl or heterocyclenyl as defined herein. The term "lower" as used in connection with the term cyclic is the same as noted herein regarding the cycloalkyl, cycloalkenyl, heterocyclyl or heterocyclenyl.

"Cyclylcarbonyl" means a cyclyl-C(=O)- moiety wherein the cyclyl moiety is as defined herein.

"Cyclylcarbonyloxy" means a cyclyl-C(=O)-O- moiety wherein the cyclyl moiety is as defined herein.

"Cyclyloxy" means a cyclyl-O- moiety wherein the cyclyl moiety is as herein described. Exemplary cycloalkoxy moieties include cyclopentyloxy, cyclohexyloxy, quinuclidyloxy, pentamethylenesulfideoxy, tetrahydropyranyloxy, tetrahydrothiophenyloxy, pyrrolidinyloxy, tetrahydrofuranyloxy or 7-oxabicyclo[2.2.1]heptanyloxy, hydroxytetrahydropyranyloxy, hydroxy-7-oxabicyclo[2.2.1]heptanyloxy, and the like.

"Cyclyloxycarbonyl" means a cyclyl-O-C(=O)- moiety wherein the cyclyl moiety is as herein described.

"Cyclylsulfinyl" means a cyclyl-S(O)- moiety wherein the cyclyl moiety is as herein described.

"Cyclylsulfonyl" means a cyclyl-$S(O)_2$- moiety wherein the cyclyl moiety is as herein described.

"Cyclylthio" means a cyclyl-S- moiety wherein the cyclyl moiety is as herein described.

"Diazo" means a bivalent -N=N- radical.

"Halo" means fluoro, chloro, bromo, or iodo. Preferred are fluoro, chloro or bromo.

"Heteroaroyl" means a heteroaryl-C(=O)- moiety wherein the heteroaryl moiety is as herein described. Exemplary heteroaroyl moieties include thiophenoyl, nicotinoyl, pyrrol-2-ylcarbonyl, 1-and 2-naphthoyl, pyridinoyl, and the like.

"Heteroaroyloxy" means a heteroaryl-C(=O)-O moiety wherein the heteroaryl moiety is as defined herein.

"Heteroaryl" means an aromatic monocyclic or multicyclic ring system of about 5 to about 14 carbon atoms, preferably about 5 to about 10 carbon atoms, in which one or more of the carbon atoms in the ring system is/are heteroatom(s) other than carbon, for example boron, nitrogen, oxygen, phosphorous, sulfur, silicon, or germanium. Preferably the ring system includes 1 to 3 heteroatoms. Preferred ring sizes of rings of the ring system include about 5 to about 6 ring atoms. "Substituted heteroaryl" means a heteroaryl moiety as defined above which is substituted with one or more "ring moiety substituents" (preferably 1 to 3) which may be the same or different and are as defined herein. The designation of the aza, oxa or thia as a prefix before heteroaryl define that at least a nitrogen, oxygen or sulfur atom is present, respectively, as a ring atom. A nitrogen atom of a heteroaryl may be a basic nitrogen atom and may also be optionally oxidized to the corresponding N-oxide. Exemplary heteroaryl and substituted heteroaryl moietymoieties include pyrazinyl, thienyl, isothiazolyl, oxazolyl, pyrazolyl, furazanyl, pyrrolyl, 1,2,4-thiadiazolyl, pyridazinyl, quinoxalinyl, phthalazinyl, imidazo[1,2-a]pyridine, imidazo[2,1-b]thiazolyl, benzofurazanyl, azaindolyl, benzimidazolyl, benzothienyl, thienopyridyl, thienopyrimidyl, pyrrolopyridyl, imidazopyridyl, benzoazaindolyl, 1,2,4-triazinyl, benzthiazolyl, furanyl, imidazolyl, indolyl, indolizinyl, isoxazolyl, isoquinolinyl, isothiazolyl, oxadiazolyl, pyrazinyl, pyridazinyl, pyrazolyl, pyridyl, pyrimidinyl, pyrrolyl, quinazolinyl, quinolinyl, 1,3,4-thiadiazolyl, thiazolyl, thienyl, triazolyl, and the like.

"Heteroatom" means an atom other than carbon, for example boron, nitrogen, oxygen, phosphorous, sulfur, silicon, or germanium.

"Heteroaryldiazo" means a heteroaryl -diazo- moiety wherein the heteroaryl and diazo moieties are as defined herein.

"Heteroaryldiyl" means a bivalent radical derived from a heteroaryl, wherein the heteroaryl is as described herein. An exemplary heteroaryldiyl radical is optionally substituted pyridinediyl.

"Heteroaryloxy" means a heteroaryl-O- moiety wherein the heteroaryl moiety is as herein described.

"Heteroaryloxycarbonyl" means a heteroaryl-O-C(=O)- moiety wherein the heteroaryl moiety is as herein defined.

"Heteroarylsulfinyl" means a heteroaryl-S(O)- moiety wherein the heteroaryl moiety is as defined herein.

"Heteroarylsulfonyl" means a heteroaryl-$S(O)_2$- moiety wherein the aryl moiety is as defined herein.

"Heteroarylsulphonylcarbamoyl" means a heteroaryl-$SO_2$-NH-C(=O)-moiety wherein the heteroaryl moiety is as herein described.

"Heterocyclenyl" means a non-aromatic monocyclic or multicyclic hydrocarbon ring system of about 3 to about 10 carbon atoms, preferably about 5 to about 10 carbon atoms, in which one or more of the carbon atoms in the ring system is/are heteroatom(s) other than carbon, for example boron, nitrogen, oxygen, phosphorous, sulfur, silicon, or germanium, and which contains at least one carbon-carbon double bond or carbon-nitrogen double bond. Preferably, the ring includes 1 to 3 heteroatoms. Preferred ring sizes of rings of the ring system include about 5 to about 6 ring atoms; and such preferred ring sizes are also referred to as "lower". The designation of the aza, oxa or thia as a prefix before heterocyclenyl define that at least a nitrogen, oxygen or sulfur atom is present, respectively, as a ring atom. "Substituted heterocyclenyl" means a heterocyclenyl moiety as defined above which is substituted with one or more "ring moiety substituents" (preferably 1 to 3) which may be the same or different and are as defined herein. The nitrogen atom of a heterocyclenyl may be a basic nitrogen atom. The nitrogen or sulfur atom of the heterocyclenyl may also be optionally oxidized to the corresponding N-oxide, S-oxide or S,S-dioxide. Exemplary monocyclic azaheterocyclenyl moieties include 1,2,3,4-tetrahydrohydropyridine, 1,2-dihydropyridyl, 1,4-dihydropyridyl, 1,2,3,6-tetra-hydropyridine, 1,4,5,6-tetrahydropyrimidine, 2-pyrrolinyl, 3-pyrrolinyl, 2-imidazolinyl, 2-pyrazolinyl, and the like. Exemplary oxaheterocyclenyl moieties include 3,4-dihydro-2H-pyran, dihydrofuranyl, and fluorodihydro-furanyl. An exemplary multicyclic oxaheterocyclenyl moiety is 7-oxabicyclo[2.2.1]heptenyl. Exemplary monocyclic thiaheterocyclenyl rings include dihydrothiophenyl and dihydrothiopyranyl.

"Heterocyclyl" means a non-aromatic saturated monocyclic or multicyclic ring system of about 3 to about 10 carbon atoms, preferably about 5 to about 10 carbon atoms, in which one or more of the carbon atoms in the ring system is/are heteroatom(s) other than carbon, for example boron, nitrogen, oxygen, phosphorous, sulfur, silicon, or germanium. Preferably, the ring system contains from 1 to 3 heteroatoms. Preferred ring sizes of rings of the ring system include about 5 to about 6 ring atoms; and such preferred ring sizes are also referred to as "lower". The designation of the aza, oxa or thia as a prefix before heterocyclyl define that at least a nitrogen, oxygen or sulfur atom is present respectively as a ring atom. "Substituted heterocyclyl" means a heterocyclyl moiety as defined above which is substituted with one or more "ring moiety substituents" (preferably 1 to 3) which may be the same or different and are as defined herein. The nitrogen atom of a heterocyclyl may be a basic nitrogen atom. The nitrogen or sulfur atom of the heterocyclyl may also be optionally oxidized to the corresponding N-oxide, S-oxide or S,S-dioxide. Exemplary monocyclic heterocyclyl rings include piperidyl, pyrrolidinyl, piperazinyl, morpholinyl, thiomorpholinyl, thiazolidinyl, 1,3-dioxolanyl, 1,4-dioxanyl, tetrahydrofuranyl, tetrahydrothiophenyl, tetrahydrothiopyranyl, and the like.

"Ring moiety substituents" mean substituents attached to aromatic or non-aromatic ring systems inclusive of methyl, aryl, heteroaryl, hydroxy, alkoxy, cyclyloxy, aryloxy, heteroaryloxy, acyl or its thioxo analogue, cyclylcarbonyl or its thioxo analogue, aroyl or its thioxo analogue, heteroaroyl or its thioxo analogue, acyloxy, cyclylcarbonyloxy, aroyloxy, heteroaroyloxy, halo, nitro, cyano, carboxy (acid), -C(=O)-NHOH, -C(=O)-$CH_2$OH, -C(=O)-$CH_2$SH,-C(=O)-NH-CN, sulpho, phosphono, alkylsulphonylcarbamoyl, tetrazolyl, arylsulphonylcarbamoyl, N-methoxycarbamoyl, heteroarylsulphonylcarbamoyl, 3-hydroxy-3-cyclobutene-1,2-dione, 3,5-dioxo-1,2,4-oxadiazolidinyl or hydroxyheteroaryl such as 3-hydroxyisoxazolyl, 3-hydoxy-1-methylpyrazoly, alkoxycarbonyl, cyclyloxycarbonyl, aryloxycarbonyl, heteroaryloxycarbonyl, alkylsulfonyl, cyclylsulfonyl, arylsulfonyl, heteroarylsulfonyl, alkylsulfinyl, cyclylsulfinyl, arylsulfinyl, heteroarylsulfinyl, alkylthio, cyclylthio, arylthio, heteroarylthio, cyclyl, aryldiazo, heteroaryldiazo, thiol. When a ring system is saturated or partially saturated, the "ring moiety substituents" further include, methylene ($H_2C$=), oxo (O=) and thioxo (S=). Acidic/amide ring moiety substituents are carboxy (acid), -C(=O)-NHOH, -C(=O)-$CH_2$OH,-C(=O)-$CH_2$SH, -C(=O)-NH-CN, sulpho, phosphono, alkylsulphonylcarbamoyl, tetrazolyl, arylsulphonylcarbamoyl, N-methoxycarbamoyl, heteroarylsulphonylcarbamoyl, 3-hydroxy-3-cyclobutene-1,2-dione, 3,5-dioxo-1,2,4-oxadiazolidinyl or hydroxyheteroaryl such as 3-hydroxyisoxazolyl, 3-hydoxy-1-methylpyrazoly. Non-acidic polar ring moiety substituents are hydroxy, oxo (O=), thioxo (S=), acyl or its thioxo analogue, cyclylcarbonyl or its thioxo analogue, aroyl or its thioxo analogue, heteroaroyl or its thioxo analogue, alkoxycarbonyl, cyclyloxycarbonyl, aryloxycarbonyl, heteroaryloxycarbonyl, acyloxy, cyclylcarbonyloxy, aroyloxy, heteroaroyloxy, alkylsulfonyl, cyclylsulfonyl, arylsulfonyl, heteroarylsulfonyl, alkylsulfinyl, cyclylsulfinyl, arylsulfinyl, heteroarylsulfinyl, thiol.

The present invention features a MOF having a crystalline lattice comprising metallic nodes and organic ligands, wherein:

a) each organic ligand comprises a Lewis acidic or basic centre bound to N conjugated systems, wherein N is comprised between 2 and 5;

b) said metallic nodes consist of metal ions or metal clusters located at the vertices of the crystalline lattice and

coordinating said plurality of organic ligands; and
c) said metallic nodes comprise metals of the rare-earth metal series, such as metals of the lanthanide series.

Lanthanide metal-organic frameworks show peculiar and, in certain contexts such as biological imaging and sensing, useful luminescent properties. Lanthanide photoluminescence has many unique properties that make them ideal for imaging applications, such as characteristically sharp and generally non-overlapping emission bands in the visible and near-infrared (NIR) regions of the spectrum, resistance to photobleaching or 'blinking', and long luminescence lifetimes, particularly those with europium and terbium as metal nodes. Various sensitizing conjugated systems have been selected in the past to coordinate to, and thus excite the emissive states of, lanthanide ions, so a wide spectrum from UV to infrared light may be observed.

Indirect sensitization of lanthanide emission can be accomplished by employing the "antenna effect," where the conjugated system linkers act as antennae and absorb an excitation energy (typically in the form of electromagnetic radiation such as an ultraviolet radiation), transfer the energy to the emissive state of the lanthanide, and yield lanthanide luminescence upon radiative relaxation.

According to the present invention, a rare-earth or lanthanide metal-organic framework is disclosed that can be used for several applications by exploiting two main unique features: 1) its porous, crystalline nanostructure and 2) the antenna effect-driven photoluminescence provided by the rare-earth/lanthanide emission upon MOF excitation. In particular, the MOFs described in the present disclosure can be used in any context where a tuneable photoluminescence is sought. Typical applications are compound sensing, solar cells, bioimaging, therapeutics, detection and removal of heavy metals from water or biological fluids and LED manufacturing, to cite a few.

In a particular embodiment according to the present invention, as it will be explained hereinafter in more details, the MOFs herein described can be used for ion sensing, such as for instance Fluoride (F-) sensing, in a sample.

After an extensive work of research and optimization through simulations and "wet lab" experiences, the present inventors developed rare-earth, in particular lanthanide, metal-organic frameworks having a surprising behaviour and advantageous features compared to MOFs known in the art. In fact, upon irradiation with an electromagnetic radiation, the developed MOFs emit light according to the antenna effect; however, in the presence of reactive species in a sample brought into contact with the said MOFs, the emissions resulting from the radiative electron transition in the lanthanide-containing nodes are quenched upon interaction between said reactive species and the Lewis acidic or basic centre of the ligands, thus making this structure an efficient turn-off optical system. Even more surprisingly, in certain aspects, the above mentioned interaction is such that the developed MOFs can be re-used after removal of the sample, so that a key accomplishment of the present invention is represented by the development of a reversible, reusable and recyclable MOF, which has never been reported in the past. This is particularly beneficial and valuable in the frame of compound sensing such as ion sensing, since it could allow the manufacture of accurate, sensitive and fast-response chemosensors and chemodosimeters.

According to the invention, the organic ligands have a Lewis acidic centre or a Lewis basic centre bound to N conjugated systems, wherein N is comprised between 2 and 5. Lewis acidic centres according to the present invention can be for instance Boron, Tin, Silicon, Antimony or Phosphorus. In one aspect, the Lewis acidic centre is a Boron (B).

Lewis basic centres according to the present invention can be for instance Nitrogen.

In one aspect, the conjugated systems bound to the Lewis acidic or basic centre within an organic ligand can be all the same or different among them. For instance, within an organic ligand having a Lewis acidic or basic centre bound to three (3) conjugated systems, said ligand can have 1, 2 or 3 different conjugated systems.

Further, according to the invention, the conjugated systems can be for instance substituted or unsubstituted aliphatic moieties and/or substituted or unsubstituted aromatic groups such as a substituted or unsubstituted aryl groups as defined herein. As a way of example, the conjugated systems can be moieties such as alkenyl, alkenyloxy, alkynyl, aroyl, aroyloxy, aryl, aryloxy, aryloxycarbonyl, arylsulfonyl, arylsulphonylcarbamoyl, arylsulfinyl, arylthio, cycloalkenyl, heteroaroyl, heteroaroyloxy, heteroaryl, heteroaryldiazo, heteroaryloxy, heteroaryloxycarbonyl, heteroarylsulfinyl, heteroarylsulfonyl, heteroarylsulphonylcarbamoyl, possibly having aliphatic or ring moiety substituents as defined herein, in any combination. In one aspect, the conjugated systems comprise or consist of aryl moieties. In one aspect, the conjugated systems comprise or consist of substituted aryl moieties. In one aspect, the conjugated systems are independently selected from a group comprising, but not limited to, substituted or unsubstituted phenyl, naphthalenyl, phenanthrenyl, anthracenyl, benz[b]anthracenyl, pentacenyl, triphenylenyl, chrysenyl, benzo[e]pyrenyl, benzo[a]pyrenyl, pyrenyl and perylenyl moieties, particularly phenyl, anthracenyl, pyrenyl and perylenyl moieties.

In a preferred aspect, the conjugated systems are at least mono-substituted with compounds selected from a list comprising Br, -COOH, $-NH_2$, $-PO_3H$, - $SO_3H$, -OH and -pyridine. In a more preferred aspect, the conjugated systems comprise or consist of aryl moieties at least mono-substituted with compounds selected from a list comprising Br, -COOH, $-NH_2$, $-PO_3H$,$-SO_3H$, -OH and -pyridine. In one aspect, the conjugated systems are mono-, di-, tri-, tetra- or penta-substituted phenyl moieties, such as phenyl moieties mono-, di-, tri- or tetra-substituted with substituents independently selected from a group comprising F, $CH_3$ and $C_2H_6$. In one aspect, the conjugated systems are di-, tri-, tetra- or penta-substituted phenyl moieties, wherein at least one substituent is selected from a list comprising Br,-COOH, $-NH_2$, $-PO_3H$, - $SO_3H$, -OH and -pyridine.

The number of conjugated systems linked to the organic ligand's centre has an important influence on the properties of the obtainable MOFs, as it determines the crystalline lattice the obtained MOF will have, and accordingly some of the functional properties of the same. As it will be appreciated by a person skilled in the relevant art, in conjunction with the type of conjugated system, the number of these latter impacts for instance the structural voids present in the MOF, that in turn have an effect in connection with e.g. access and/or sequestration of reactive species brought into contact with the MOFs. According to some aspects of the present invention, said voids can have a volume spanning from about 1000 $Å^3$ to about 40000 $Å^3$, such as for instance between 2000 and 20000 $Å^3$, between 2000 and 10000 $Å^3$ or between 2000 and 4000 $Å^3$, for instance 3000 $Å^3$. Said voids can represent from 10 up to 80% of a unit-cell volume, such as for instance between 20 to 60%, between 30 to 50% or between 35 to 40%. In one aspect, the number N of conjugated systems is 3.

According to one aspect of the invention, the organic ligands are of the formula (I):

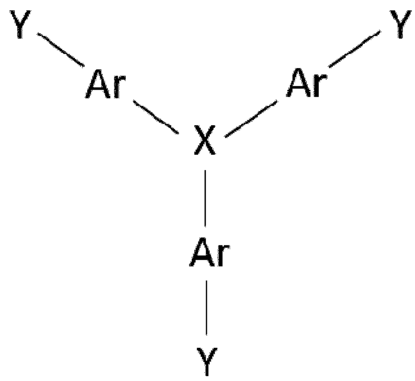

(I)

wherein

X is selected from a group comprising B, Sn, Sb, Si, C, P and N, preferably X is B;
each Y is independently selected from a group comprising Br, -COOH, - $NH_2$, $-PO_3H$, - $SO_3H$, -OH and -pyridine, preferably Y is Br or -COOH and
each Ar (connecting X and Y) is a substituted or unsubstituted aryl moiety, such as for instance, and without limitations, substituted or unsubstituted phenyl, naphthalenyl, phenanthrenyl, anthracenyl, benz[b]anthracenyl, pentacenyl, triphenylenyl, chrysenyl, benzo[e]pyrenyl, benzo[a]pyrenyl, pyrenyl and perylenyl moieties, particularly aryl moiety is selected from the group comprising phenyl, anthracenyl, pyrenyl and perylenyl moieties; preferably aryl moiety is phenyl moiety.

In a particular aspect according to the present disclosure, the organic ligands have a propeller-like shape, in which X is a Boron (B) and each Y is Br or -COOH. Some examples of ligands according to the invention are shown in Figure 5, and some examples of MOFs according to the invention are shown in Figure 6.

In a particular aspect according to the present disclosure, the organic ligands are of the formula (II):

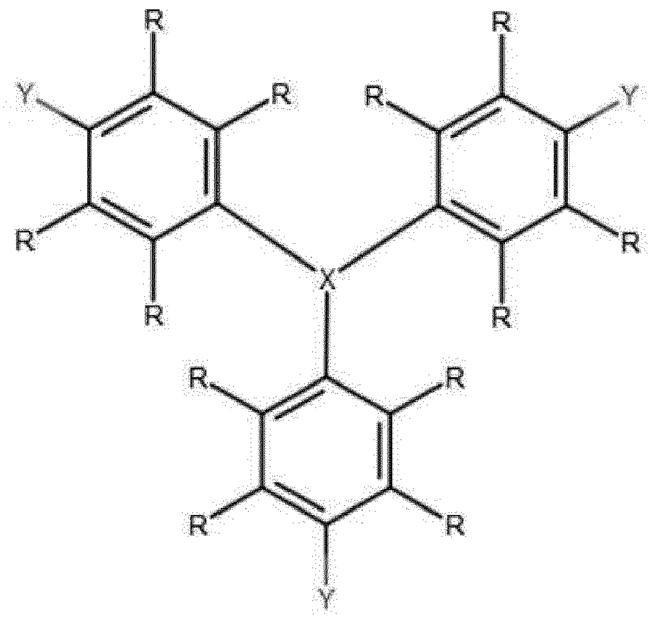

(II)

wherein

X is selected from a group comprising B, Sn, Sb, Si, C, P and N; preferably X is B;
each Y is independently selected from a group comprising Br, -COOH,-$NH_2$, -$PO_3H$, - $SO_3H$, -OH and -pyridine, preferably Y is Br or -COOH; and
each R is independently selected from a group comprising H, F, $CH_3$ and $C_2H_6$, preferably each R is H or F or $CH_3$ or $C_2H_6$.

In a particular aspect according to the present disclosure, the organic ligands have a propeller-like shape, in which X is a Boron (B), each Y is Br or -COOH and each R is $CH_3$.

A further object of the invention pertains to a process for the production of a metal-organic framework comprising the steps of:

a) providing organic ligands comprising a Lewis acidic or basic centre bound to N conjugated systems, wherein N is comprised between 2 and 5; and
b) contacting said organic ligands with a compound comprising metals of the rare-earth series, under conditions allowing to obtain a metal-organic framework according to the invention.

For the sake of clarity, in the frame of the disclosed method, the word "ligand" is to be intended as a starting compound, or an intermediate of a chemical reaction, that can be used to obtain a metal organic framework according to the invention. The word "monomer" can be similarly and interchangeably used to intend a ligand in the context of a method for MOF production.

The organic ligands according to the present method comprise Lewis acidic centres such as for instance Boron, Tin, Silicon, Antimony or Phosphorus. In one aspect, the Lewis acidic centre is a Boron (B). Concerning Lewis basic centres, these can be for instance Nitrogen.

In one aspect of the method of the invention, the conjugated systems bound to the Lewis acidic or basic centre within an organic ligand can be all the same or different among them. For instance, within an organic ligand comprising a Lewis acidic or basic centre bound to three (3) conjugated systems, said ligand can have 1, 2 or 3 different conjugated systems.

Further according to the method of the invention, the conjugated systems can be for instance substituted or unsubstituted aliphatic moieties and/or substituted or unsubstituted aromatic groups such as a substituted or unsubstituted aryl group as defined herein. As a way of example, the conjugated systems can be moieties such as alkenyl, alkenyloxy, alkynyl, aroyl, aroyloxy, aryl, aryloxy, aryloxycarbonyl, arylsulfonyl, arylsulphonylcarbamoyl, arylsulfinyl, arylthio, cycloalkenyl, heteroaroyl, heteroaroyloxy, heteroaryl, heteroaryldiazo, heteroaryloxy, heteroaryloxycarbonyl, heteroarylsulfinyl, heteroarylsulfonyl, heteroarylsulphonylcarbamoyl, possibly having aliphatic or ring moiety substituents as defined herein, in any combination. In one aspect, the conjugated systems comprise or consist of aryl moieties. In

one aspect, the conjugated systems comprise or consist of substituted aryl moieties. In one aspect, the conjugated systems are independently selected from a group comprising, but not limited to, substituted or unsubstituted phenyl, naphthalenyl, phenanthrenyl, anthracenyl, benz[b]anthracenyl, pentacenyl, triphenylenyl, chrysenyl, benzo[e]pyrenyl, benzo[a]pyrenyl, pyrenyl and perylenyl moieties, particularly phenyl, anthracenyl, pyrenyl and perylenyl moieties.

In a preferred aspect, the conjugated systems are at least mono-substituted with compounds selected from a list comprising Br, -COOH, $-NH_2$, $-PO_3H$,$-SO_3H$, -OH and -pyridine. In a more preferred aspect, the conjugated systems comprise or consist of aryl moieties at least mono-substituted with compounds selected from a list comprising Br, -COOH, $-NH_2$, $-PO_3H$,$-SO_3H$, -OH and -pyridine. In one aspect, the conjugated systems are mono-, di-, tri-, tetra- or penta-substituted phenyl moieties, such as phenyl moieties mono-, di-, tri- or tetra-substituted with substituents independently selected from a group comprising F, $CH_3$ and $C_2H_6$. In one aspect, the conjugated systems are di-, tri-, tetra- or penta-substituted phenyl moieties, wherein at least one substituent is selected from a list comprising Br, - COOH, $-NH_2$, $-PO_3H$, - $SO_3H$, -OH and -pyridine.

In one aspect, a method for the production of a metal-organic framework according to the invention is disclosed, wherein the organic ligands are of formula (I):

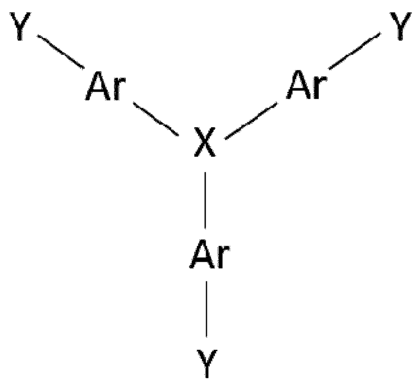

(I)

wherein

X is selected from a group comprising B, Sn, Sb, Si, C, P and N, preferably X is B;

each Y is independently selected from a group comprising Br, -COOH,$-NH_2$, $-PO_3H$, - $SO_3H$, -OH and -pyridine, preferably Y is Br or -COOH; and

each Ar (connecting X and Y) is a substituted or unsubstituted aryl moiety, such as for instance substituted or unsubstituted phenyl, naphthalenyl, phenanthrenyl, anthracenyl, benz[b]anthracenyl, pentacenyl, triphenylenyl, chrysenyl, benzo[e]pyrenyl, benzo[a]pyrenyl, pyrenyl and perylenyl moieties, particularly aryl moiety is selected from the group comprising phenyl, anthracenyl, pyrenyl and perylenyl moieties, preferably aryl moiety is phenyl moiety.

In a particular aspect according to the present disclosure, the organic ligands have a propeller-like shape, in which X is a Boron (B) and each Y is Br or-COOH. Some examples of organic ligands according to the invention are shown in Figure 5, and some examples of MOFs according to the invention are shown in Figure 6.

In particular aspect according to the present disclosure, the organic ligands are of the formula (II):

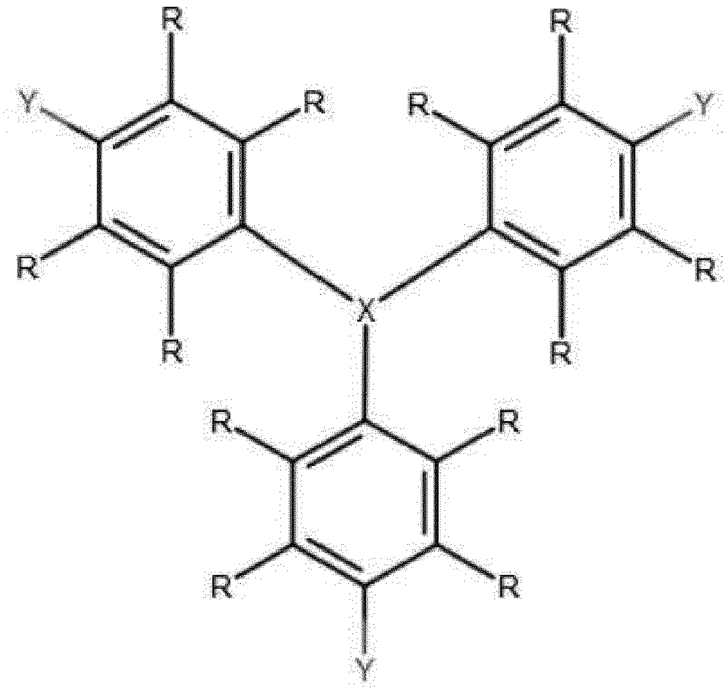

(II)

wherein

X is selected from a group comprising B, Sn, Sb, Si, C, P and N, preferably X is B;
each Y is independently selected from a group comprising Br, -COOH,-$NH_2$, -$PO_3H$, - $SO_3H$, -OH and -pyridine, preferably Y is Br or -COOH; and
each R is independently selected from a group comprising H, F, $CH_3$ and $C_2H_6$, preferably each R is H or F or $CH_3$ or $C_2H_6$.

In a particular aspect according to the present disclosure, the organic ligands have a propeller-like shape, in which X is a Boron (B), each Y is Br or -COOH and each R is $CH_3$.

Regarding the reaction conditions suitable for obtaining a MOF according to the invention, organic ligands and compounds comprising metals of the lanthanide series can be brought into contact into aqueous, organic or mixed solutions (aqueous : organic solutions). One or a plurality of chemical reactions take place upon bringing into contact organic ligands and compounds comprising metals of the lanthanide series; said reactions can be facilitated or accelerated by mixing under e.g. stirring conditions liquid solutions comprising the starting compounds and/or by heating the sample comprising the starting compounds at a temperature comprised between 25 and 200 °C, such as between 50 and 150 °C or between 80 and 130 °C, for a time comprised between 1 minute and 7 days, such as for instance between 24 and 72 hours. In one aspect, the reaction takes place in a sealed reaction vial and the vial is heated up to a target temperature, e.g. about 120 °C, with a heating rate of 2 °C / min, and then cooled down with a ramp of 0.2 °C/min.

For what is said above, another object of the present invention relates to a compound of formula (I):

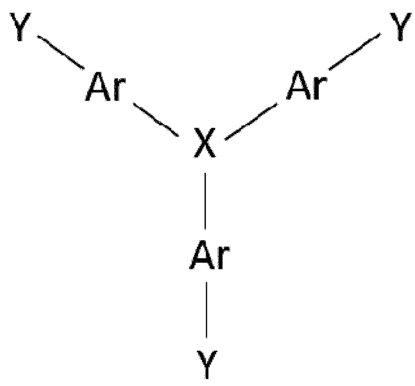

(I)

wherein

X is selected from a group comprising B, Sn, Sb, Si, C, P and N, preferably X is B;
each Y is independently selected from a group comprising Br, -COOH, - $NH_2$, -$PO_3H$, - $SO_3H$, -OH and -pyridine, preferably Y is Br or -COOH; and each Ar connecting X and Y is a substituted or unsubstituted aryl moiety, such as for instance substituted or unsubstituted phenyl, naphthalenyl, phenanthrenyl, anthracenyl, benz[b]anthracenyl, pentacenyl, triphenylenyl, chrysenyl, benzo[e]pyrenyl, benzo[a]pyrenyl, pyrenyl and perylenyl moieties, particularly aryl moiety is selected from the group comprising phenyl, anthracenyl, pyrenyl and perylenyl moieties, preferably aryl moiety is phenyl moiety, as well as the use of said compound in the production of a metal-organic framework (MOF). In a particular aspect according to the present disclosure, the compound has a propeller-like shape, in which X is a Boron (B), each Y is Br or -COOH and each R is $CH_3$.

In one aspect, said compound is such that X is a Boron (B), each R is $CH_3$ and each Y is Br or -COOH. Some examples of compounds according to the invention are shown in Figure 5.
In one aspect, said compound is a compound of formula (II):

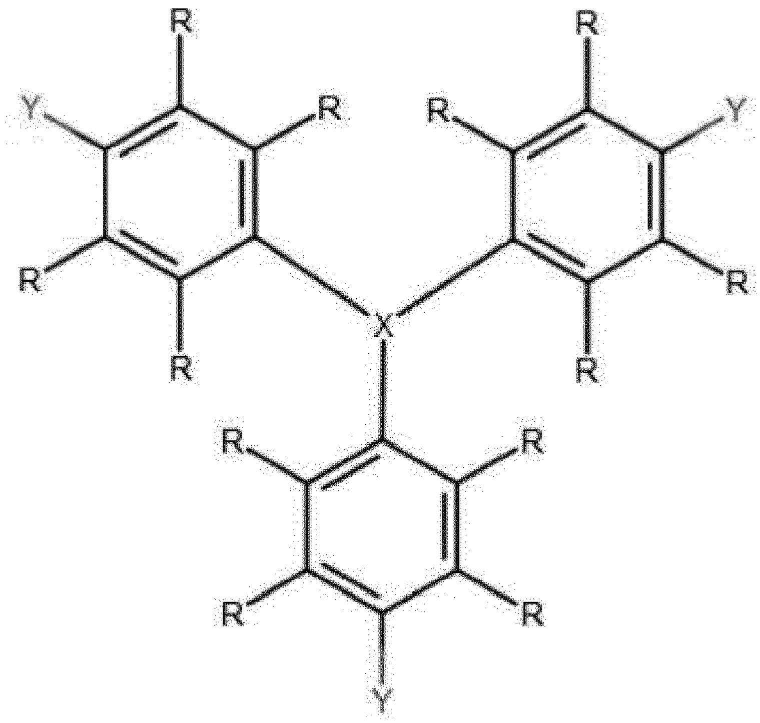

(II)

wherein

X is selected from a group comprising B, Sn, Sb, Si, C, P and N, preferably X is B;
each Y is independently selected from a group comprising Br, -COOH,-$NH_2$, -$PO_3H$, - $SO_3H$, -OH and -pyridine, preferably Y is Br or -COOH; and
each R is independently selected from a group comprising H, F, $CH_3$ and $C_2H_6$., preferably each R is H or F or $CH_3$ or $C_2H_6$.

As previously mentioned, many metal-organic frameworks as known in the art are exploited for sensing purposes, such as analyte concentration or dosage measurements in samples. Also in the frame of the present invention, one aspect thereof relates to the use of a metal-organic framework according to the present disclosure for compound sensing, and particularly for ion sensing. In a particular aspect, the sensed ion is Fluoride ion ($F^-$). As will be detailed in the Example part of the present disclosure, one specific MOF according to the invention has been conceived and developed specifically to develop new sensors with fast optical response, which can be selective and sensitive towards the detection of ions present in samples such as e.g. water. Based on this, in a real word embodiment of the present invention, a new metal organic framework material that is selective and sensitive towards $F^-$ anions present in e.g. water was rationally designed and synthesised. However, the MOFs of the present invention are in no way limited to the detections of $F^-$ anions; to the contrary, the MOFs according to the present disclosure can be adapted for many other applications and, in the context of compound sensing, to sense and detect many other compounds in various samples such as for instance other atomic or molecular anions or cations including heavy metals, arsenates, nitrates, nitrites, cyanide or ammonia.

As it will be apparent to a person skilled in the art, another aspect of the invention relates to a sensor, said sensor comprising a metal-organic framework according to the present invention. In one aspect, said sensor is an ion sensor. In one specific aspect, said sensor is a fluoride sensor, i.e. the sensed ion is Fluoride ion ($F^-$). As used herein, the word "sensor" identifies devices that measure physical quantities or properties of a sample or of an element within a sample, and convert them into signals which can be read by observers or by instruments, for instance by sending information to other electronics such as a computer processor. At the same time, for the word "sensor" is herein meant any physical element that, when operably connected with a suitable device, allows to measure physical quantities or properties of a sample or of an element within a sample. For instance, a sensor according to the present invention can be a device such as for instance a chemiresistive or chemicapacitive sensor comprising a MOF of the invention, or otherwise a MOF holder or container such as a cuvette, tube, cartridge or any other element that can be functionally connected with an electronic device. In this context, according to another aspect of the invention, a kit comprising a sensor is herein disclosed. As it will be evident to a skilled person, a kit comprising a sensor is any kit comprising a holder or container containing a MOF according to the invention, said holder or container being operably connectable with a device such as an electronic device. A kit can further comprise, depending on the needs and circumstances, instructions for use thereof, diluents, rinsing agents as well as any other compound/element useful for the use said sensor is intended for.

In still a further aspect of the invention, a fluorometer device is disclosed, said device comprising:

a) means for providing a source of an electromagnetic radiation;
b) an element comprising a metal-organic framework according to the invention, said element being operatively connected with said means for providing a source of an electromagnetic radiation; and
c) means for detecting and analysing an electromagnetic radiation, operatively connected with both a) and b).

In one aspect, said means for detecting and analysing an electromagnetic radiation comprises a photodetector comprising a photodiode. Alternatively, a position sensor or a video camera can be exploited as suitable means.

The element comprising a metal-organic framework is preferably a transparent element such as a transparent tube or a cuvette configured to be set into the fluorometer device so to be irradiated by a source of an electromagnetic radiation, which can be for instance visible light, infrared light or UV radiation.

Still according to another aspect of the invention, it is disclosed a method for ion sensing comprising:

a) providing an ion sensor or a fluorometer device as described herein;
b) contacting a metal-organic framework according to the invention comprised within said sensor or device with a sample comprising an ion to be sensed;
c) irradiating said metal-organic framework with a source of an electromagnetic radiation under conditions to obtain a light emission;
d) detecting and analysing said light emission; and
e) comparing said light emission with a light emission obtained in the absence of a sample comprising an ion to be sensed, wherein a difference in light emission is indicative of the presence of a sensed ion. In one aspect, a difference in light emission is a reduction of light emission.

The electromagnetic radiation can be for instance visible light, infrared light or UV radiation. In a preferred aspect, the electromagnetic radiation is UV radiation. In one aspect, the sensed ion is Fluoride ion ($F^-$). In another aspect, the method further comprises a step f) of removing the sample and cleaning the ion sensor, thereby regenerating said sensor. Said cleaning can be performed for instance by rinsing the metal-organic framework with a suitable liquid solution such as aqueous solutions, organic solutions (e.g. ethanol solutions) or mixed solutions so as to remove all traces of the samples and regenerate the sensor, thus rendering it re-usable.

Some examples will be hereinafter presented, which however are not to be considered as limiting of the disclosed matter.

## EXAMPLE

In a real-world, implemented aspect of the invention, the inventors developed a rapid and accurate $F^-$ test method based on a new, rationally-designed, water-stable and regenerateable europium, $Eu^{III}$-based MOF, called SION-105, which acts as a turn-off optical sensor with fast response and high selectivity to $F^-$.

Additionally, the present inventors addressed the challenge of limited portable, accurate and reliable $F^-$ sensors by presenting a robust and portable prototype device that was designed to exploit the characteristics of SION-105 for rapid, reproducible and quantitative detection of $F^-$ in ground water samples.

The constituent building blocks of SION-105 were carefully chosen to meet the criteria for a $F^-$-sensitive optical sensor. In particular, the carefully selected propeller-like, boron (B)-functionalised tris(*p*-carboxylic acid)tridurylborane ligand ($H_3$tctb), has been selected to fulfil dual purpose in the application of $F^-$sensing: (i) the central three-coordinated B acts as a Lewis-acidic binding site for $F^-$-ions, and (ii) upon UV irradiation of SION-105, the ligand populates the red-emissive $^5D_0$ energy levels of the Eu ions via the antenna effect. The distinct 625 nm emissions resulting from the radiative $^5D_0 \rightarrow {}^7F_2$ transition are quenched upon interaction of $F^-$ with the Lewis acidic site, thus making this system an efficient turn-off optical sensor for F- ions (Figure 1).

Relying on the sharp and stable lanthanide emission as a signal mitigates problems of polychromaticity, self-quenching, and signal interference that are seen in many chromogenic or fluorogenic chemodosimeters reported in the literature. The trigonal ligand, consisting of a boron atom in which three coordination sites are populated the by ligands, leaves one further coordination site available for electron-rich substituents such as free fluoride ions, which have a strong propensity to bind with boron via Lewis acid-base interactions. Upon interaction of a fluoride ion with the boron, the singlet S1 and/or triplet T1 energy levels that take part in the ligand-metal energy transfer are shifted, and this results in quenching of the energy transfer efficiency, which can be observed as a reduced intensity of Eu(III) emission altering the energy transfer efficiency of the ligand.

Crystals of SION-105 spontaneously self-assemble in a one-step hydro/solvo-thermal reaction of $H_3$tctb with $Eu(NO_3)_3$ in a DMF:$H_2O$ solution. The resulting rod-shaped, colourless crystals have the formula $C_{33}H_{38}BEuO_7{\cdot}2.34(C_3H_7NO) \cdot 4(H_2O)$, and crystallize in the monoclinic space group $C_2/c$, $a$ = 32.1523(12) Å, $b$ = 8.6704(2) Å, $c$ = 32.0714(15) Å, $\beta$ = 115.022(5)°, $V$= 8101.5(6) Å$^3$, $Z$ = 8. The asymmetric unit of SION-105 is composed of one $Eu^{III}$ atom, one $tctb^{3-}$ ligand, and one coordinated $H_2O$ molecule, all placed in general positions. The main constituent of the crystal structure of SION-105 is $Eu^{III}_2$ dimers: two $Eu^{III}$ atoms separated by the distance of 3.9682(11) Å, joined together by two $\mu_2$-bridging $H_2O$ molecules and two $tctb^{3-}$ $\eta^1$:$\eta^1$-bridging modes (Figure 1). The distance between two $Eu^{III}$ atoms within the dimer is nearly equal to the Eu-Eu separation found in metallic europium, 3.941 Å. Each $Eu^{III}$ atom, apart from being bound to the bridging ligands already mentioned, is also attached to two other $tctb^{3-}$ ligands through the $\eta^2$-chelating mode. Structural voids in between the elements of this framework form 1-dimensional zigzag-shape channels extending along the [101] direction with periodic ramifications along [101]; this structural property restricts the aperture size of the MOF, thus protecting the functional B-groups that are arranged within its voids. The structural voids, with a volume of 2160 Å, comprise 26.7% of the unit-cell volume, and are exposed to the $E^{III}$ dimers. Low porosity values determined from $CO_2$ isotherms confirm that these voids are well protected from large guest molecules, in the absence of which, photoluminescence measurements show the characteristic $Eu^{III}$ emission spectrum with a peak centered around 620 nm. TGA analysis shows that SION-105 is stable up to 300 °C, while PXRD data confirms its stability upon activation and immersion in pure water.

A simple and user-friendly method for measuring of $F^-$ ion concentration in water samples was devised using SION-105. The optimized method requires 0.25 mL of water sample to be added to a 2.5 mL suspension of SION-105 in tetrahydrofuran (THF). In the absence of $F^-$, UV irradiation of SION-105 excites the lowest triplet state of the ligand, from where energy transfer to the $Eu^{III}$ results in a sharp centered at 625 nm. This emission is quenched upon addition of $F^-$ ions into the water sample, with a linear quenching response in the relevant concentration range of 0 - 2 ppm (Figure 2). Analysis of the non-linear Stern-Volmer plot (Figure 2b) reveals a combination of static and dynamic quenching mechanisms, described by $\frac{I_0}{I} = (1 + k_q\tau_0[F])(1 + K_a[F])$, where $I_0$ is the emission intensity in the absence of $F^-$

, I is the intensity in the presence of F-, $k_q$ is the quenching rate constant (1.581), $\tau_0$ is the emission lifetime of the as-made MOF (~740 $\mu s$), $K_a$ is the F-B association constant (0.782) and [*F*] is the concentration of $F^-$. Static quenching occurs due to a shift in the triplet energy of the ligand caused by the interaction of $F^-$ with the B binding site, thus reducing the number of active energy transfer sites in the crystal network. Dynamic quenching on the other hand occurs as the ions diffuse through the MOF channels, resulting in the reduction of both, emission intensity as well as average luminescence lifetime (Figure 2). Dynamic luminescence quenching is the less dominant contribution, as evidenced by the nominal decrease in emission lifetime from ~740 $\mu s$ to 670 $\mu s$ at a $F^-$ concentration of 2 ppm. Further confirmation of the role of the quenching mechanism was determined by phosphorescence spectroscopy of an isostructural gadolinium (Gd) SION-105, synthesized by replacing $Eu(NO_3)_3$ with $Gd(NO_3)_3$ in the standard synthetic procedure.

The steric protection of the B site by the positions of the duryl groups in the ordered structure limits the nature of B-$F^-$ interaction to a weakly electrostatic, hydrogen bond-like interaction rather than a covalent sharing of the $F^-$ lone pair electrons with the empty p-orbital of the three-coordinated B. This protects the structure from potential collapse or loss of crystallinity, which would have been observed in the case of a covalent B-$F^-$ bond formation, as the B geometry would shift from trigonal to tetrahedral. The unchanged B 1s peak seen in X-ray Photoelectron Spectroscopy (XPS) spectra of as-made and $F^-$-treated SION-105 confirms the weak nature of this interaction (Figure 3a), and PXRD spectra of SION-105 after exposure to aqueous solutions of several ions confirms the preservation of the crystal structure, even upon loss of emission intensity in the presence of $F^-$ (Figure 3c). This protection of the B underwrites the selectivity of SION-105 to $F^-$ ions, as seen from measurements of SION-105 emission intensity after adding equal (2 ppm) concentrations of a range of anions and cations commonly found in drinking water, where only $F^-$, the smallest and most electronegative nucleophile, has a significant quenching effect (Figure 3a). An added advantage of the weak B-$F^-$ interaction is its reversibility (Figure 3b and 3c). Unlike other systems reported in the literature, SION-105 is a recyclable $F^-$ sensor, for which washing in ethanol flushes out the $F^-$ quenchers, thus regenerating the $Eu^{III}$ luminescence and the functionality of the MOF (Figure 3c).

The promising performance of SION-105 makes it a strong candidate for real-world application in F- sensing. The inventors thus constructed a miniaturized fluorometer device as a robust and portable tool for water sampling with SION-105 (Figure 4a). The compact (10 cm x 12 cm) device consists of a cuvette holder mounted internally with three UV LEDs as excitation sources, a 590 nm long-pass filter, and a sensitive photodiode integrated with an operational amplifier. The device is powered by a 12 V source, and consists of and $I^2C$ OLED display connected to a microcontroller (Arduino UNO) coupled with a voltage divider circuit. The display thus reads out changes in voltage across the photodiode that occur in response to the addition of $F^-$, as the corresponding $F^-$ concentration (Figure 4b). Using this device, samples of bottled drinking water, tap water, and ground water sourced from Vietnam, the United Arab Emirates and Saudi Arabia were tested (Table 1).

**Table** 1: Comparison of F- concentrations measured from ground water sources in Vietnam (GW1), the United Arab Emirates (GW2), and Saudi Arabia (GW3), using ion chromatography (IC) and SION-105.

| Sample | [F-] measured from IC (ppm) | [F-] measured from SION-105 (ppm) |
|---|---|---|
| GW1 | 0.472 | 0.48 |
| GW2 | 1.780 | 1.74 |
| GW3 | 0.435 | 0.47 |

A suspension of 2 mg of SION-105 in a 1000:1 (v:v) solution of tetrahydrofuran (THF)/water sample exhibits bright red Eu(III) luminescence that is linearly quenched in the analytical range of 0 to 2.0 mg/mL of fluoride. The excellent selectivity of SION-105 to fluoride is attributed in part to the steric protection granted to the central boron. While bulky nucleophiles are incapable of interacting with the boron due to steric hindrance, the binding of fluoride ions is rapid and results in a nearly instantaneous change due to the formation of a tetrahedral fluoride adduct. The Eu(III)-luminescence thus decreases in a way that is linearly proportional to the concentration of fluoride ions in the sample, in the concentration range of interest for drinking water sampling.

The SION-105 method exhibits excellent linearity and reproducibility in the critical narrow concentration range of 0.5 to 2.0 mg/mL fluoride concentrations. In addition to this, it shows promise for exhibiting superior performance in three categories compared to similar devices that are currently available on the market:

1. Sensitivity: the calculated limit of detection (LOD) is 0.1 ppm, but further optimization can drive the accuracy and precision of this method to at least one order of magnitude improvement over commercially available solution;
2. Usability: the response time of the SION-105 method is instantaneous, making it feasible to carry out rapid sampling on-site. Compared to other colorimetric methods with relatively fast response time, which contain concen-

trated hydrochloric acid (HCl), the chemicals used in the SION-105 method are safe to carry and handle and are non-toxic;

3. Accuracy: use of an optical detection method, particularly one based on narrow characteristic emissions, yields a high signal-to-noise ratio. Additionally, interference from competing contaminants, which is one of the most common challenges faced in fluoride sensing methods, in SION-105 is limited.

Applications for which the SION-105 method is important include potable water sampling for public water supplies, bottled drinking water factories, large- and small-scale farms and agricultural industries including aquatic farms and breeders, and most importantly, environmental protection agencies.

***Synthesis and Characterisation of SION-105.***

*Synthesis of the ligand.*

All of the chemicals are commercially available and were used without any further purification. 1H (400.13 MHz) and 13C (100.62 MHz) NMR spectra were recorded on a Bruker Avance II 400 spectrometer at 298 K. High-resolution mass spectra were recorded on a Micromass Q-TOF Ultima API (ESI).

*1,4-dibromo-2,3,5,6-tetramethylbenzene (a).*

To the solution of 12.50 g of 2,3,5,6-tetramethylbenzene (90 mmol) in 70 ml of DCM with 0.5 g of $I_2$ (2.0 mmol) in a three-necked 250 ml flask, a solution of $Br_2$ (37.3 g, 12 mL, 233 mmol) in DCM was added dropwise under stirring. After refluxing for 1.5 hours under stirring, the reaction mixture was cooled down to room temperature and 25 mL of 5M NaOH solution were added, white precipitate was filtered and washed with 1 L of water and dried under oil pump overnight to afford the product as a white solid (23.23 g, 88%). $^1H$ NMR ($CDCl_3$, 400 MHz) $\delta$: 2.48 (s, 12H). $^{13}C$ ($CDCl_3$, 100 MHz) $\delta$:135.16, 128.27, 22.43.

*Tris(bromodury)borane (b).*

To a solution of 1,4-dibromo-2,3,5,6-tetramethylbenzene (7.0 g, 24.0 mmol) in dry $Et_2O$ (200 mL) under nitrogen atmosphere was added dropwise a hexane solution of n-BuLi (1.6 M, 15 mL, 24.0 mmol) at -78 °C. The reaction mixture was allowed to warm to 0 °C and stirred for 1 hour. To the mixture was added $BF_3 \cdot OEt_2$ (1.0 mL, 7.9 mmol) at -78 °C. The reaction mixture was warmed up to room temperature over 1 h and stirred overnight.

After addition of water, the mixture was extracted with $Et_2O$. The extract was washed with brine, dried over anhydrous $MgSO_4$ and concentrated under vacuum. The residue was ultrasonically suspended in a mixed $Et_2O$/MeOH solvent (5 mL/5 mL). The insoluble part was collected by filtration and washed with cooled MeOH (3 $\times$ 5 mL) to afford b as a white (4.35 g, 85%). $^1H$ NMR ($CDCl_3$, 400 MHz) $\delta$: 2.35 (s, 18H), 2.00 (s, 18H). $^{13}C$ NMR ($CDCl_3$, 100 MHz) $\delta$: 147.9, 137.2, 134.0, 131.4, 21.6, 21.1.

*Tris(p---carboxylic acid)tridurylborane (c).*

To a solution of tris(bromoduryl)borane (2.58 g, 4.0 mmol) in dry tetrahydrofuran (THF, 150 mL) under nitrogen atmosphere was added dropwise a pentane solution of t-BuLi (1.7M, 14.3 mL, 24.3 mmol) at -78 °C. After stirring for 1 h, the reaction mixture was allowed to warm up to -60 °C and then dry $CO_2$ was aerated to the solution. After 1 h, the mixture was warmed up to room temperature and stirred overnight under $CO_2$ atmosphere. The reaction mixture was quenched with water and was extracted with $Et_2O$.

The combined organic layers were washed several times with brine, dried over $MgSO_4$ and then concentrated under reduced pressure. The crude product was purified by washing with hexane to afford the product as a white solid (1.8837 g, 87%). $^1H$ NMR (THF-d8, 400 MHz) $\delta$: 2.12 (s, 18H), 1.98 (s, 18H). $^{13}C$ NMR (THF-d8, 100 MHz) $\delta$: 172.0, 149.6, 139.0, 136.6, 129.6, 19.9, 17.1. ESI MS m/z 541.2769 (calcd 541.2767 [M-H]-).

*Synthesis of SION-105.*

The reaction between tris(p---carboxylic acid)tridurylborane ($H_3L$) and $Eu(NO_3)_3$ in DMF:$H_2O$ solution under hydrothermal conditions (120 °C for 72 hours) leads in the spontaneous crystallization of Eu(L)($\mu_2$-$OH_2$)▪ •2.34DMF, hereafter SION-105, in form of rod-shape colourless crystals.

*Single crystal X-ray diffraction analysis.*

A high-quality single crystal of SION-105 was isolated from the reaction mixture. It was mounted on a KUMA KM6-CH diffractometer at the BM01 beamline (European Synchrotron Radiation Facility, Grenoble, France) and probed with X-rays ($\lambda$ = 0.71420 Å). Preliminary exposures confirmed the identity of the crystal. Using the PILATUS2M detector, the intensities of 9366 unique reflections (out of the total of 29535) were measured in the 3.022° $\leq 2\theta \leq$ 61.346° range ($R_{int}$ = 0.0395, $R_{sigma}$ = 0.0364). The crystal was kept at 100 °K during data collection. Raw data were processed with CrysAlisPro (2015) program suite, and the empirical absorption correction was performed using spherical harmonics, implemented in SCALE3 ABSPACK scaling algorithm. Crystal structure was solved with the XT structure solution program using Intrinsic Phasing and refined with the XL refinement package using least-squares minimization, implemented in the Olex2 program suite. Contribution of the disordered solvent molecules found in the structural voids of SION-105 to the measured structure factors was quantified with the SQUEEZE procedure of the PLATON program suite. The final $R_1$ was 0.1295 ($I > 2\sigma(I)$) and wR2 was 0.2648 (all data).

Unexpectedly, during the preliminary screening of single crystals of SION-105, weak satellite reflections situated in the vicinity of the hkl reflections originating from the main lattice were identified. They were namely present along the b* reciprocal-space direction, and they could not be indexed with integer k indices. To account for them it was necessary to introduce an additional vector, which was calculated as equal to q = [0, 0.4523(3), 0], thus confirming the incommensurate modulation of the crystal structure of SION-105.

*Crystal structure description.*

SION-105 crystallizes in the monoclinic space group C2/c, a =32.1523(12) Å, b = 8.6704(2) Å, c = 32.0714(15) Å, $\beta$ = 115.022(5)°, V = 8101.5(6) Å$^3$, Z = 8. Its asymmetric unit is composed of one Eu(III) atom, one $L^{3-}$ ligand, and one coordinated $H_2O$ molecule, all placed on general positions. The main constituent of the crystal structure of SION-105 is Eu(III)$_2$ dimers: two Eu(III) atoms separated by the distance of 3.9682(11) Å, joined together by two $\mu$2-bridging $H_2O$ molecules and two $L^{3-}$ $\eta$1:$\eta$1-bridging modes. The distance between two Eu(III) atoms within the dimer is nearly equal to the Eu-Eu separation found in metallic europium, 3.941 Å. Each Eu(III) atom, apart from being bound to the bridging ligands already mentioned, is also attached to two other $L^{3-}$ ligands through the $\eta$2-chelating mode. Thus, every single Eu(III)$_2$ dimer binds to six distinct $L^{3-}$ ligands. The Eu(III) atom has the coordination number of 8, and it assumes the coordination geometry of a triangular dodecahedron, as calculated with the program SHAPE. The $L^{3-}$ ligand has a propeller shape: if we draw a plane through the C9, C20, and C31 atoms forming the carboxylate groups situated at the extremities of each duryl group, then the central B1 atom lies only 0.227(8) Å below this plane.

All three duryl groups, forming the blades of the propeller, are planar and inclined with respect to the C9-C20-C31 plane by 61.8(2)°, 52.19(19)°, and 54.04(15)°. All carboxylic groups of each $L^{3-}$ ligand are involved in coordination to Eu(III): two of them in $\eta^2$-chelating, and the remaining one in a $\eta$1:$\eta$1-bridging mode; therefore, each $L^{3-}$ ligand is connected to the total of four Eu(III) atoms.

Interconnection between Eu(III)$^2$ dimers and tetradentate $L^{3-}$ ligands leads in the formation of polymeric framework extending in 3 dimensions. Structural voids in between of the elements of this framework form 1-dimensional zigzag-shape channels; they extend along the [101] direction with periodic ramifications along [101]. The structural voids, with the volume of 2160 Å$^3$, as calculated with MERCURY, comprise 26.7% of the unit-cell volume. The voids are exposed to the Eu(III)$_2$ dimers, which may facilitate the contact between potential guests and metal centres. On the other hand, the access of boron atoms to the channels is fairly limited, as they are surrounded by three bulky duryl groups.

Considering the $L^{3-}$ ligands as 3-coordinated nodes, and the Eu(III)$_2$ clusters as 6-coordinated nodes, the framework of SION-105 can be described as a 2-nodal net with a Schläfli symbol of (42.6)2(44.62.87.102) as derived with the program TOPOS Pro. Polymers of such topology have not been reported in the literature.

## Claims

1. A metal-organic framework (MOF) having a crystalline lattice comprising metallic nodes and organic ligands, wherein:

   a) each organic ligand comprises a Lewis acidic or basic centre bound to N conjugated systems, wherein N is comprised between 2 and 5;
   b) said metallic nodes consist of metal ions or metal clusters located at the vertices of the crystalline lattice and coordinating said plurality of organic ligands; and
   c) said metallic nodes comprise metals of the rare-earth series.

2. The metal-organic framework of claim 1, wherein each conjugated system is a substituted or unsubstituted aromatic

group.

3. The metal-organic framework of claim 2, wherein the aromatic group is a substituted or unsubstituted aryl group.

4. The metal-organic framework of any one of claims 1 to 3, wherein N is 3.

5. The metal-organic framework of any one of claims 1 to 4, wherein the Lewis acidic centre is a Boron (B).

6. The metal-organic framework of any one of claims 1 to 4, wherein the organic ligands are of formula (I):

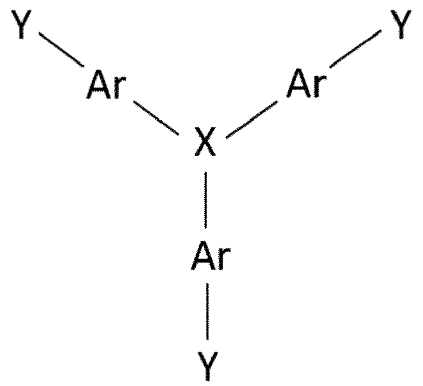

(I)

wherein

i) X is selected from a group comprising B, Sn, Sb, Si, C, P and N;
ii) each Y is independently selected from a group comprising Br, -COOH, - $NH_2$, -$PO_3H$, - $SO_3H$, -OH and -pyridine; and
iii) each Ar is a substituted or unsubstituted aryl moiety.

7. The metal-organic framework of claim 6, wherein the aryl moiety is selected from the group comprising phenyl, anthracenyl, pyrenyl and perylenyl moieties.

8. The metal-organic framework of claim 6, wherein the organic ligands are of formula (II):

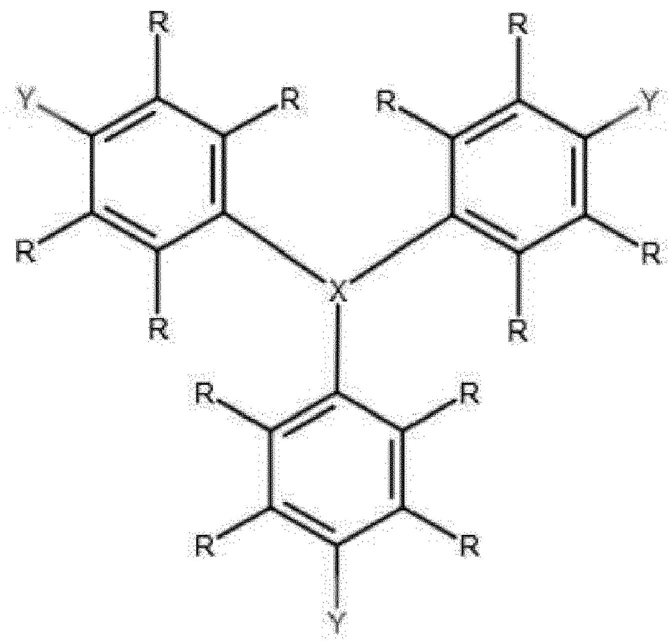

**(II)**

wherein

i) X is selected from a group comprising B, Sn, Sb, Si, C, P and N;
ii) each Y is independently selected from a group comprising Br, -COOH, -$NH_2$, -$PO_3H$, - $SO_3H$, -OH and -pyridine; and
iii) each R is independently selected from a group comprising H, F, $CH_3$ and $C_2H_6$.

**9.** The metal-organic framework of claim 8, wherein X is a Boron (B), each R is $CH_3$ and each Y is Br or -COOH.

**10.** A compound of formula (I):

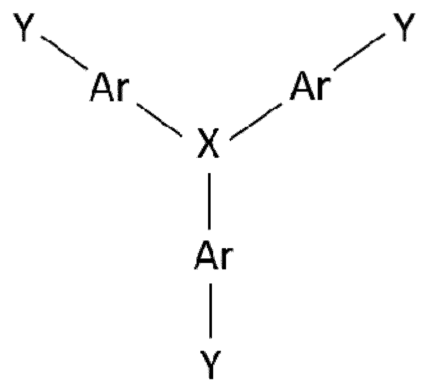

(I)

wherein

i) X is selected from a group comprising B, Sn, Sb, Si, C, P and N;
ii) each Y is independently selected from a group comprising Br, -COOH,-$NH_2$, -$PO_3H$, - $SO_3H$, -OH and -pyridine; and
iii) each Ar is a substituted or unsubstituted aryl moiety.

**11.** The compound of formula (II) according to claim 10:

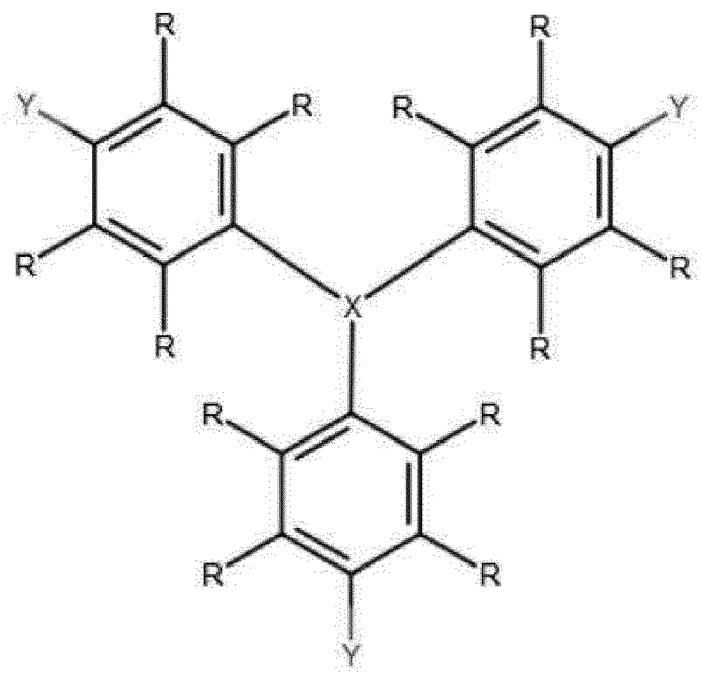

(II)

wherein

i) X is selected from a group comprising B, Sn, Sb, Si, C, P and N;
ii) each Y is independently selected from a group comprising Br, -COOH,-$NH_2$, -$PO_3H$, - $SO_3H$, -OH and -pyridine; and
iii) each R is independently selected from a group comprising H, F, $CH_3$ and $C_2H_6$.

**12.** The compound of claim 11, wherein X is a Boron (B), each R is $CH_3$ and each Y is Br or -COOH.

**13.** Use of the compound according to any one of claims 10 to 12 in the production of the metal-organic framework (MOF) according to any one of claims 1 to 9.

**14.** Use of the metal-organic framework according to any of claims 1 to 9 for ion sensing.

**15.** Use according to claim 14, wherein the sensed ion is Fluoride ion.

**Figure 1**

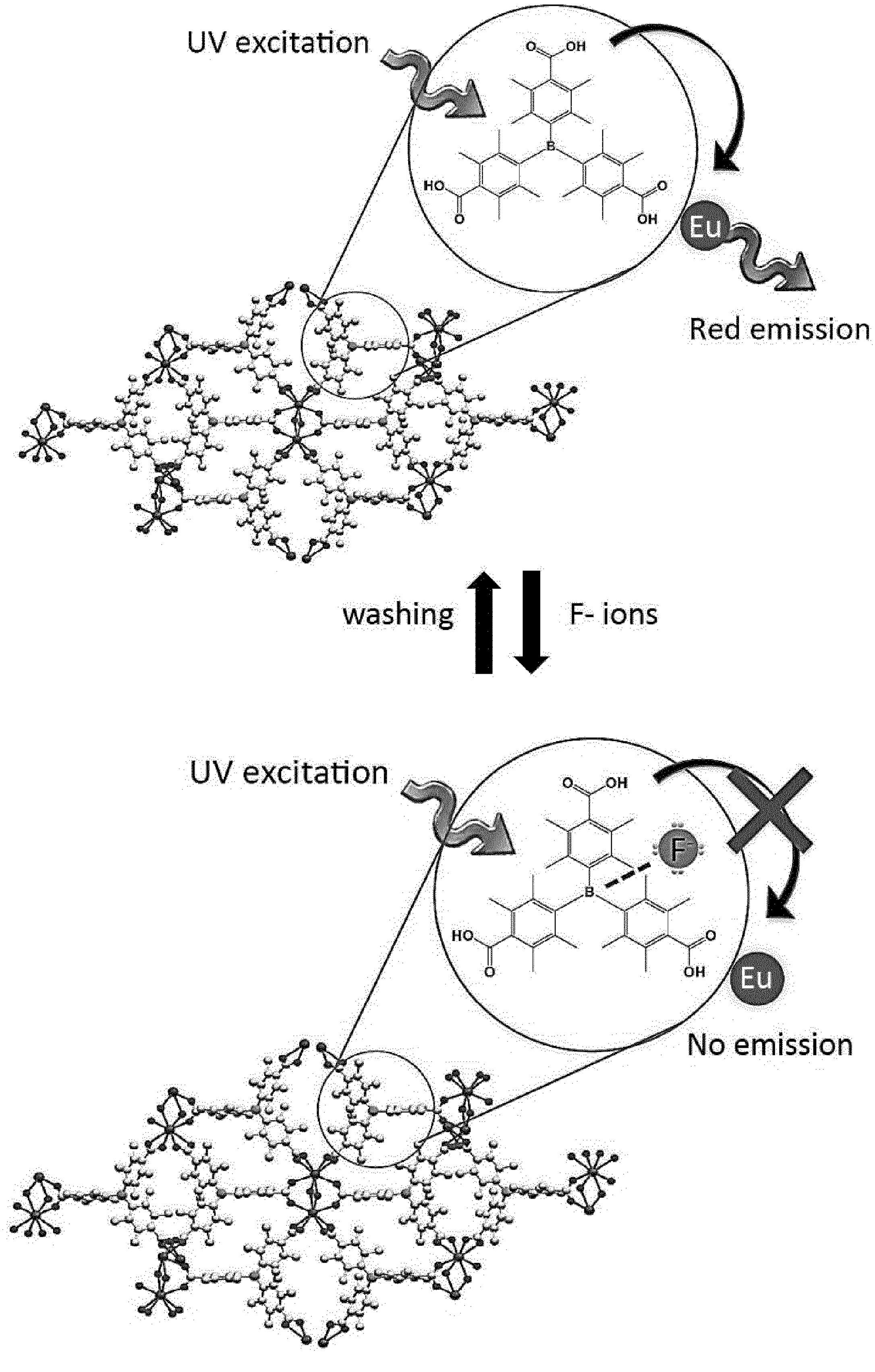
UV excitation
Eu
Red emission
washing
F- ions
UV excitation
Eu
No emission

Figure 2

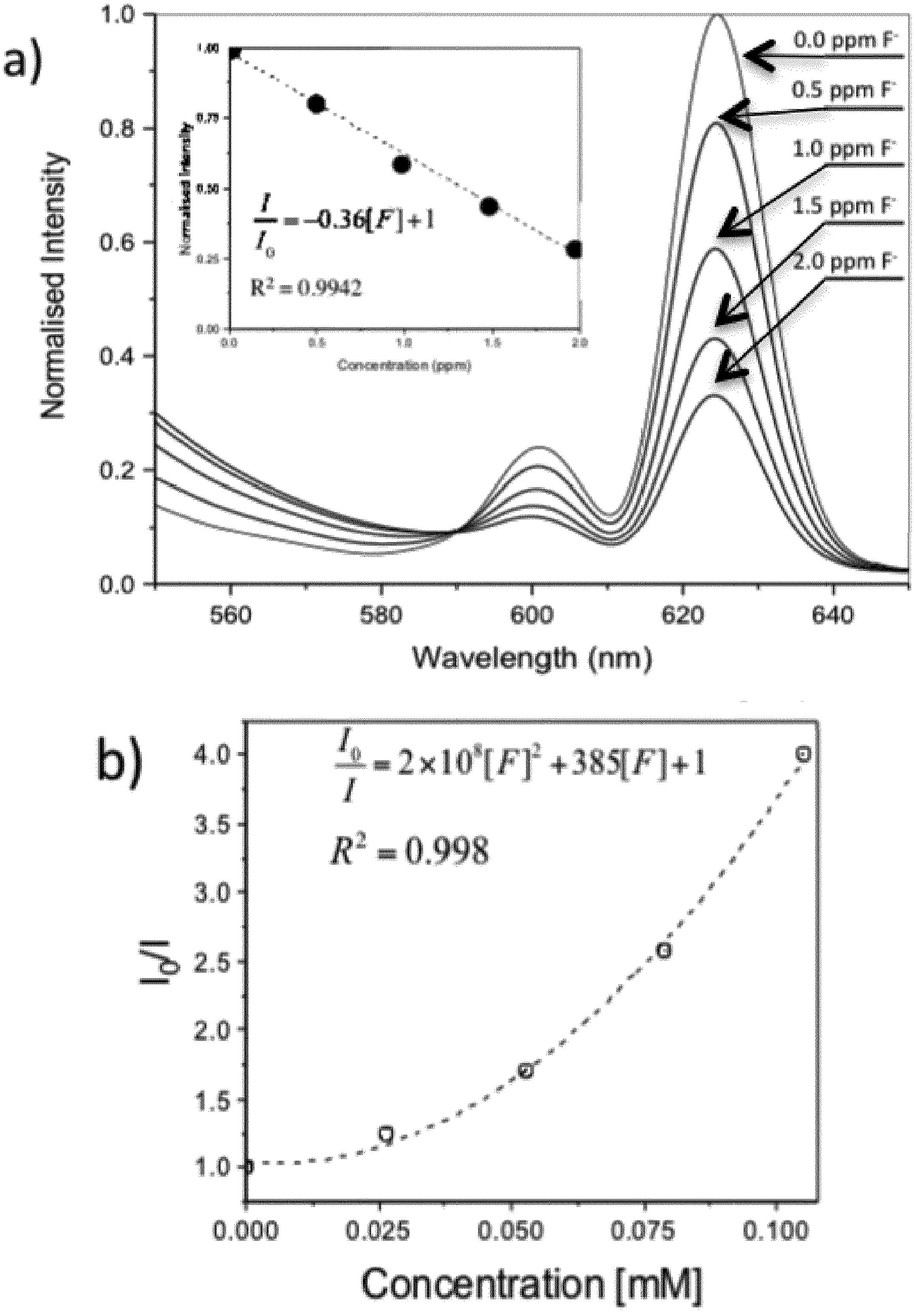
a)
Normalised Intensity
Wavelength (nm)
0.0 ppm F⁻
0.5 ppm F⁻
1.0 ppm F⁻
1.5 ppm F⁻
2.0 ppm F⁻
$\frac{I}{I_0} = -0.36[F]+1$
$R^2 = 0.9942$
Concentration (ppm)
b)
$\frac{I_0}{I} = 2\times10^8[F]^2 + 385[F]+1$
$R^2 = 0.998$
$I_0/I$
Concentration [mM]

Figure 3

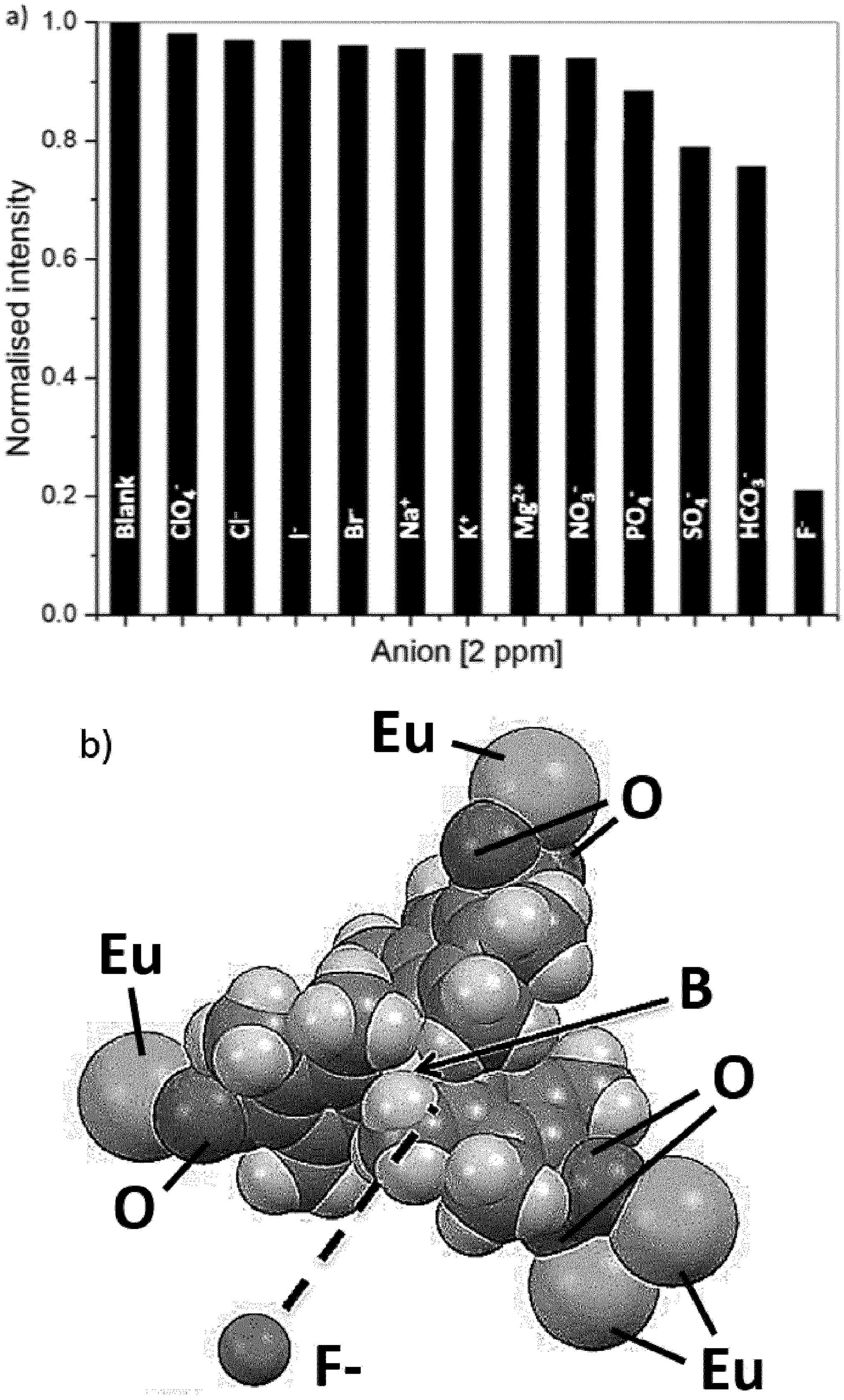
a)
Normalised intensity
1.0
0.8
0.6
0.4
0.2
0.0
Blank
ClO4-
Cl-
I-
Br-
Na+
K+
Mg2+
NO3-
PO4-
SO4-
HCO3-
F-
Anion [2 ppm]
b)
Eu
O
Eu
B
O
O
Eu
F-
Eu

Figure 3 (continued)

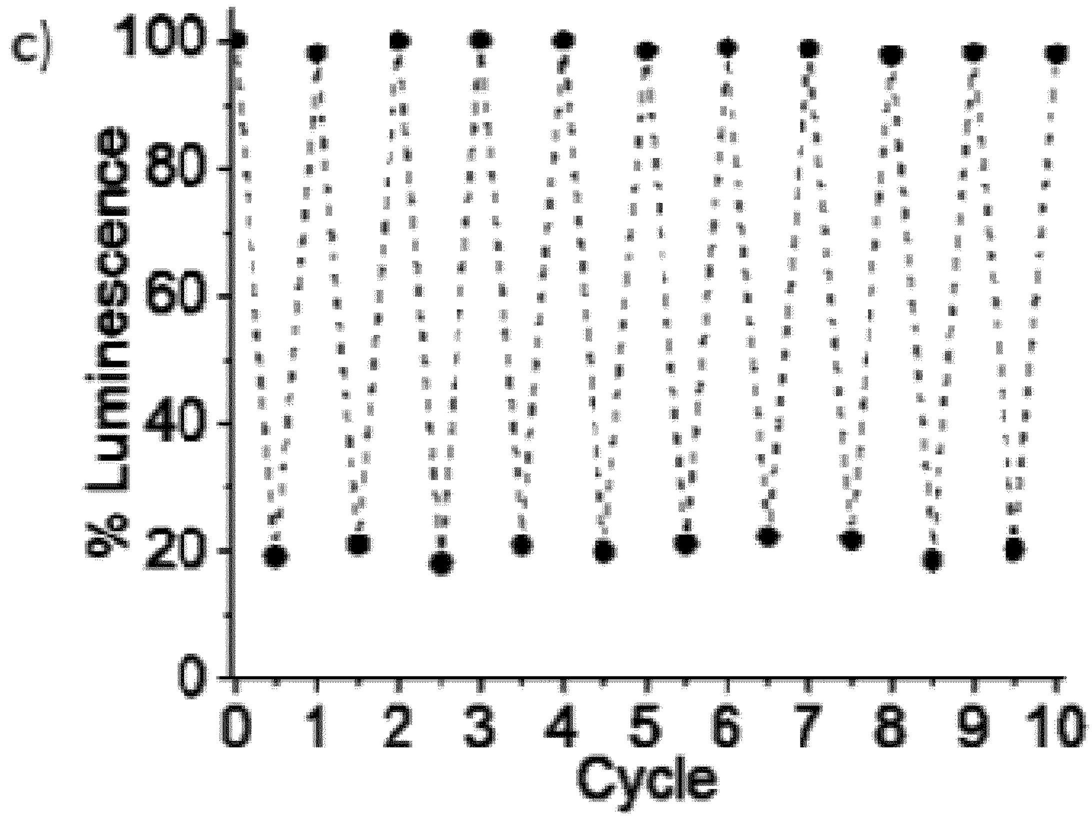

Figure 4

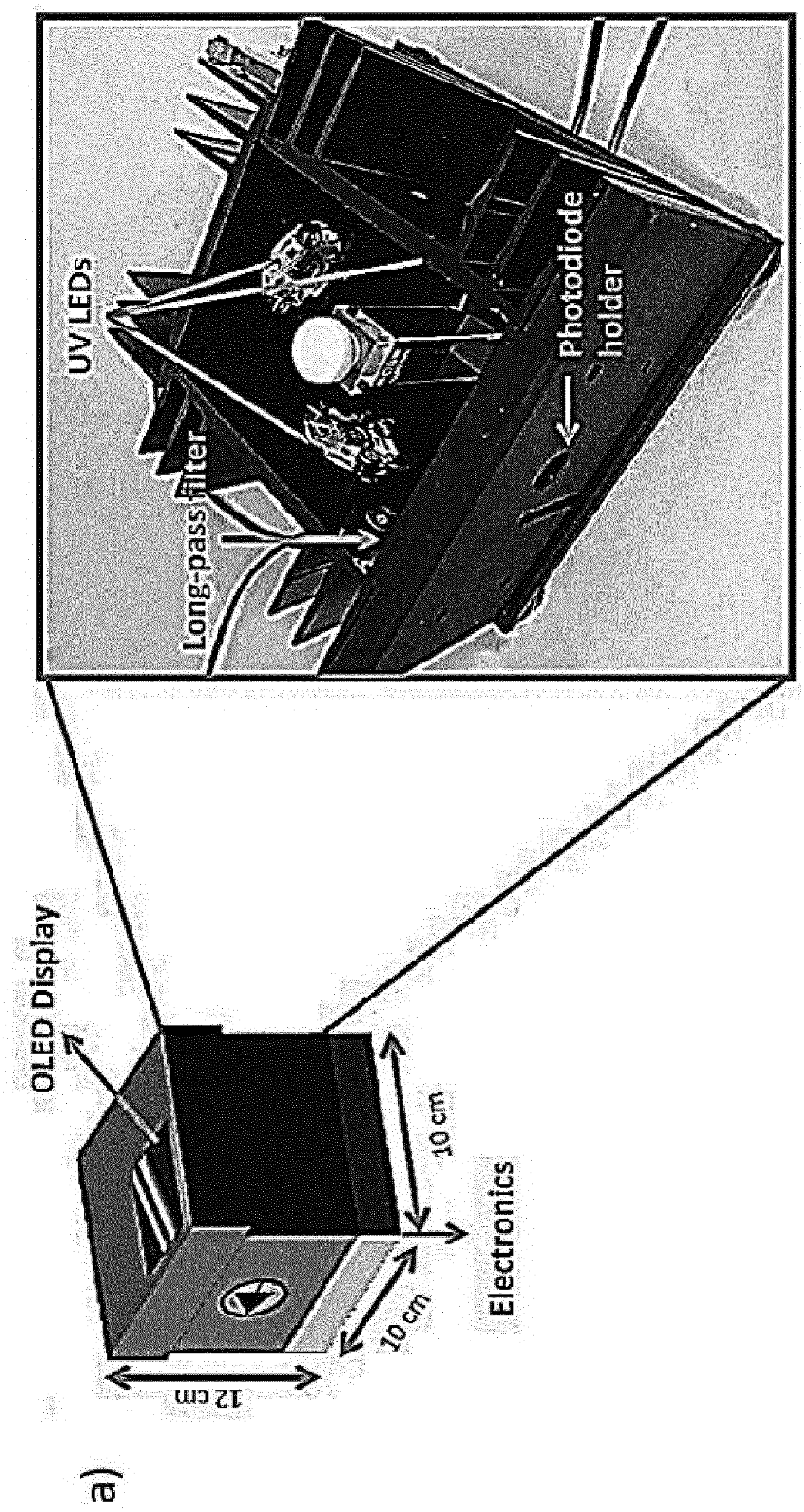
UV LEDs
Long-pass filter
Photodiode holder
OLED Display
Electronics
10 cm
10 cm
12 cm

a)

Figure 4 (continued)

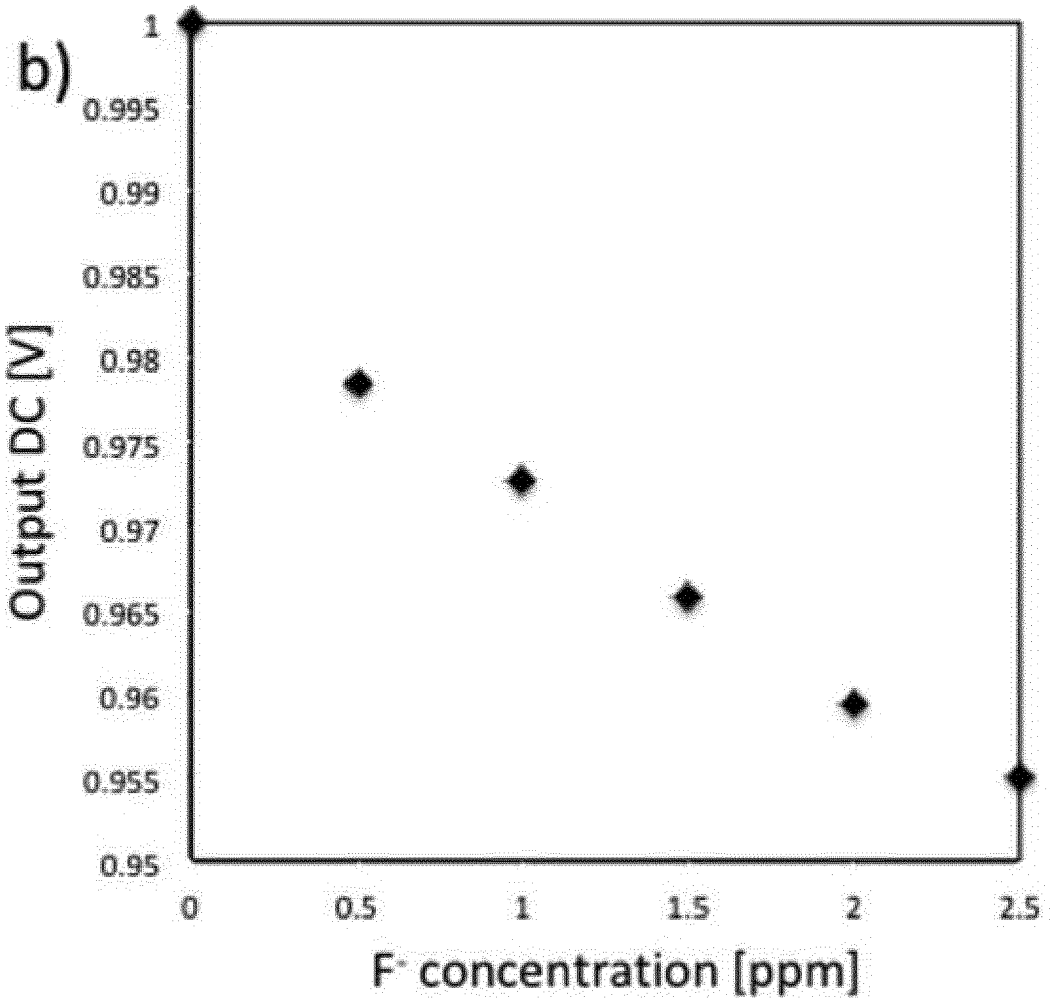

## Figure 5

L1

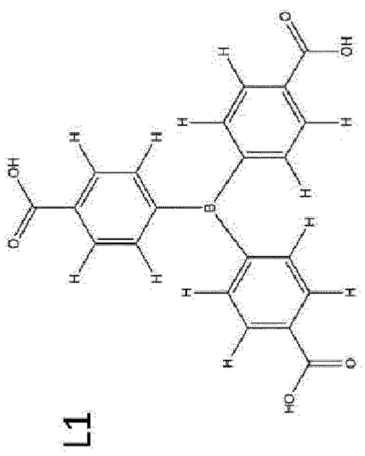

L2

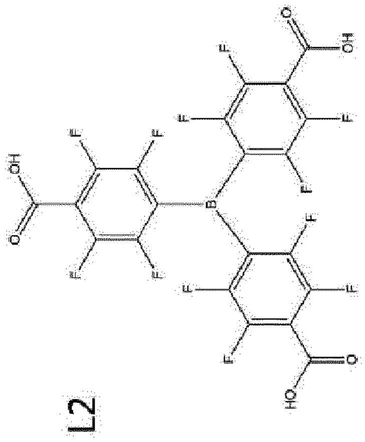

L3

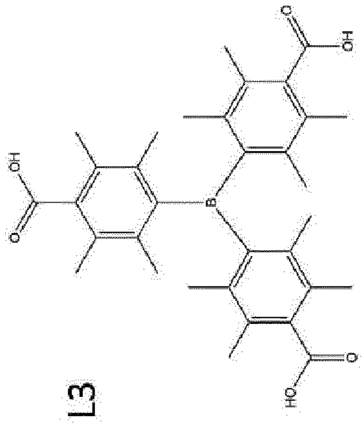

L4

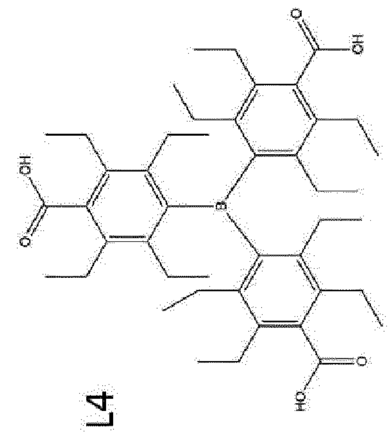

L5

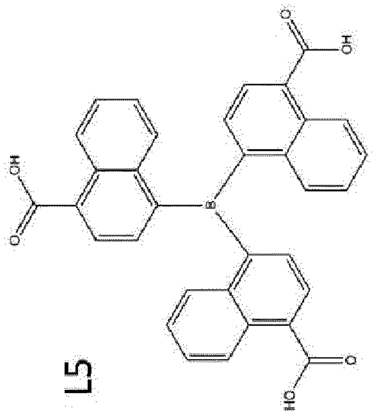

L6

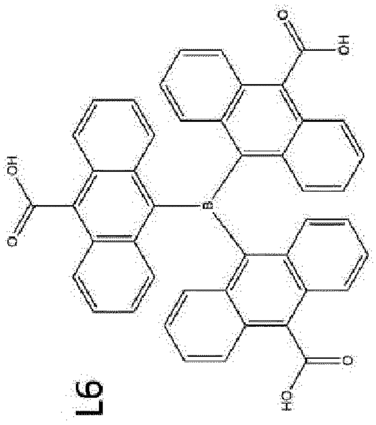

L7

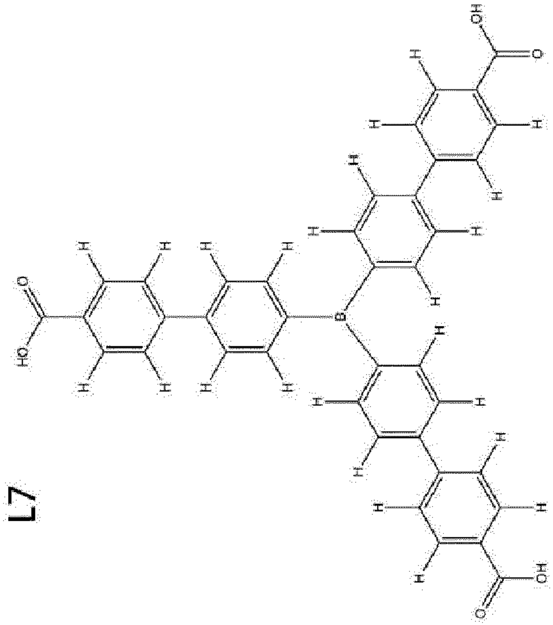

Figure 6

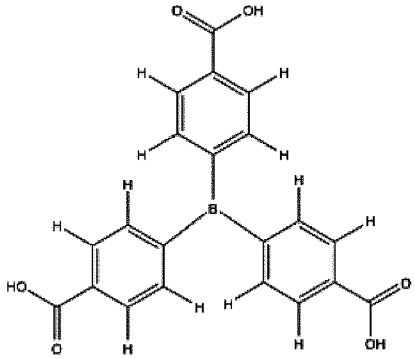

SION-105-H

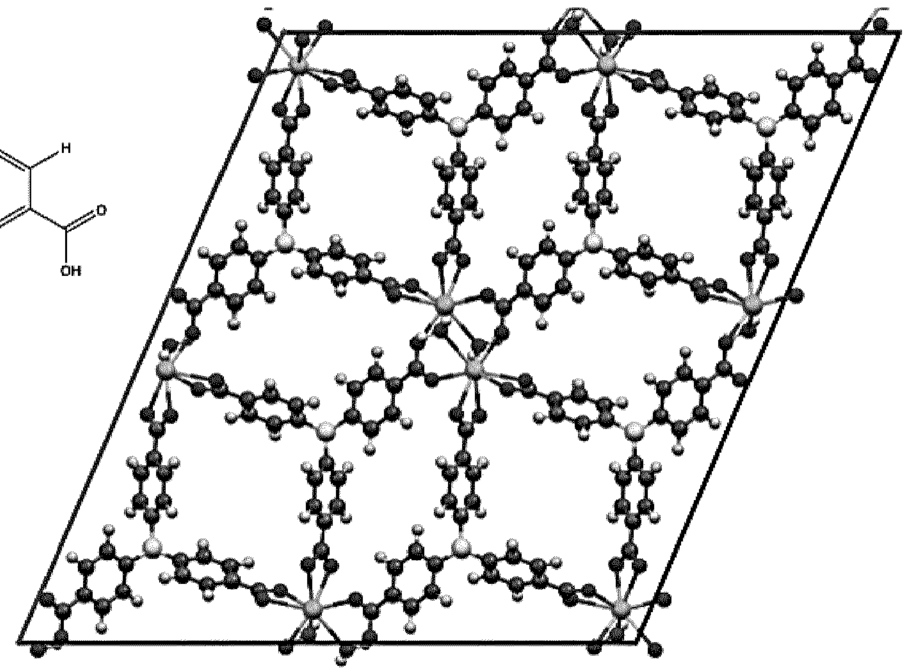

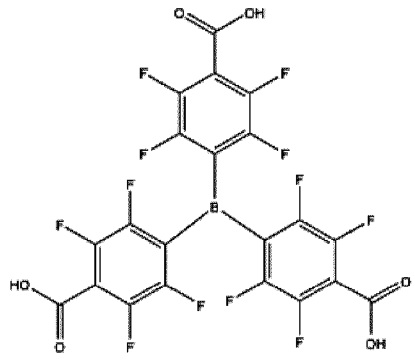

SION-105-F

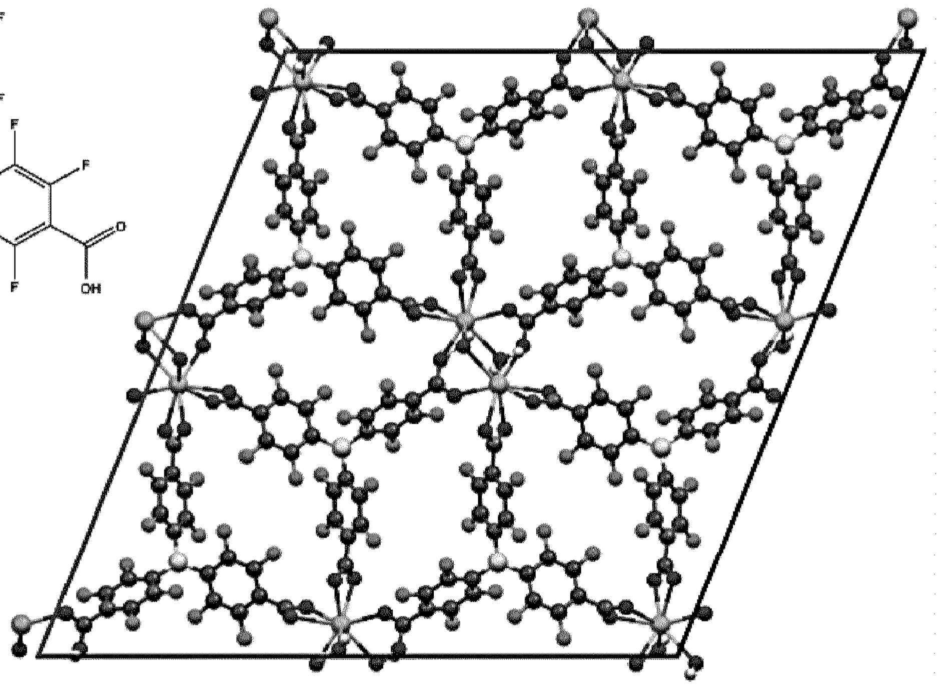

Figure 6 (continued)

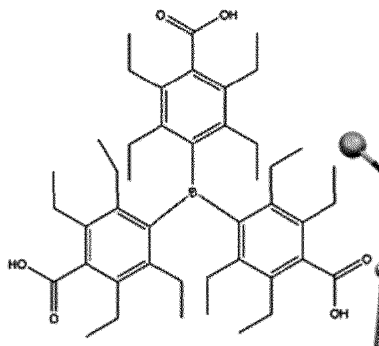

SION-105-ethyl

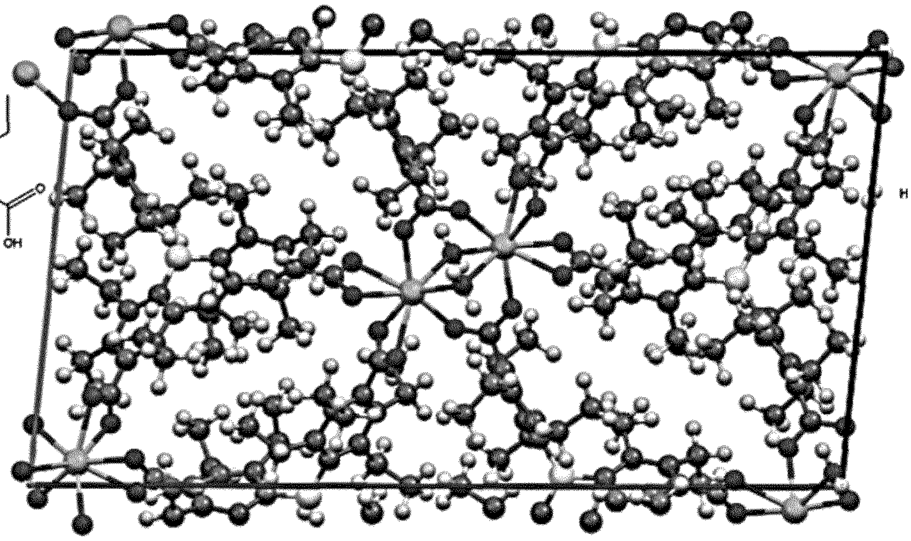

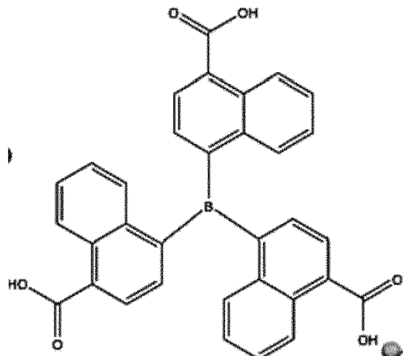

SION-105-naphthalene

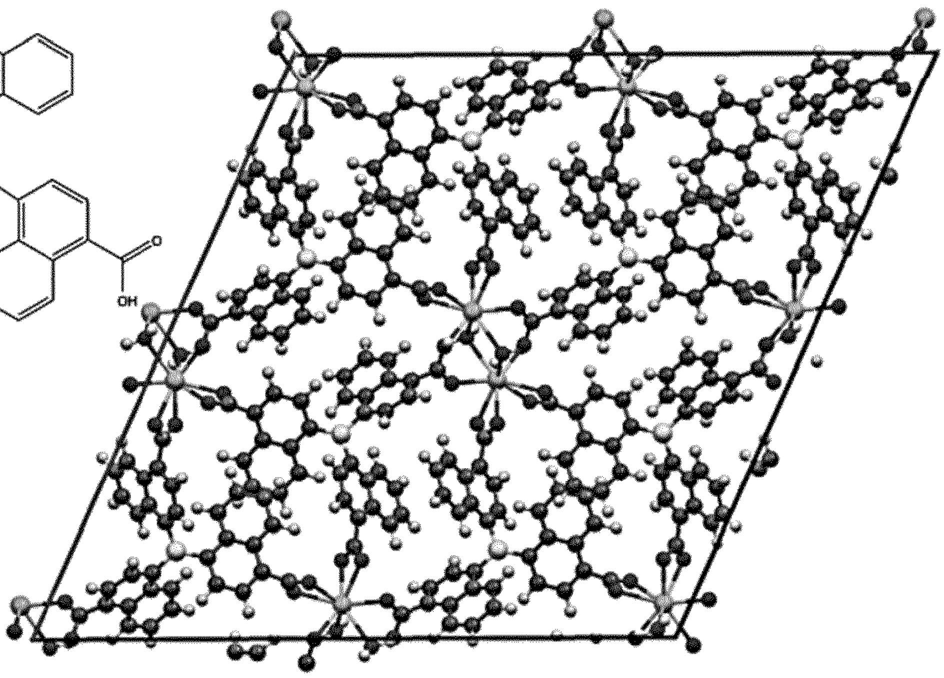

Figure 6 (continued)

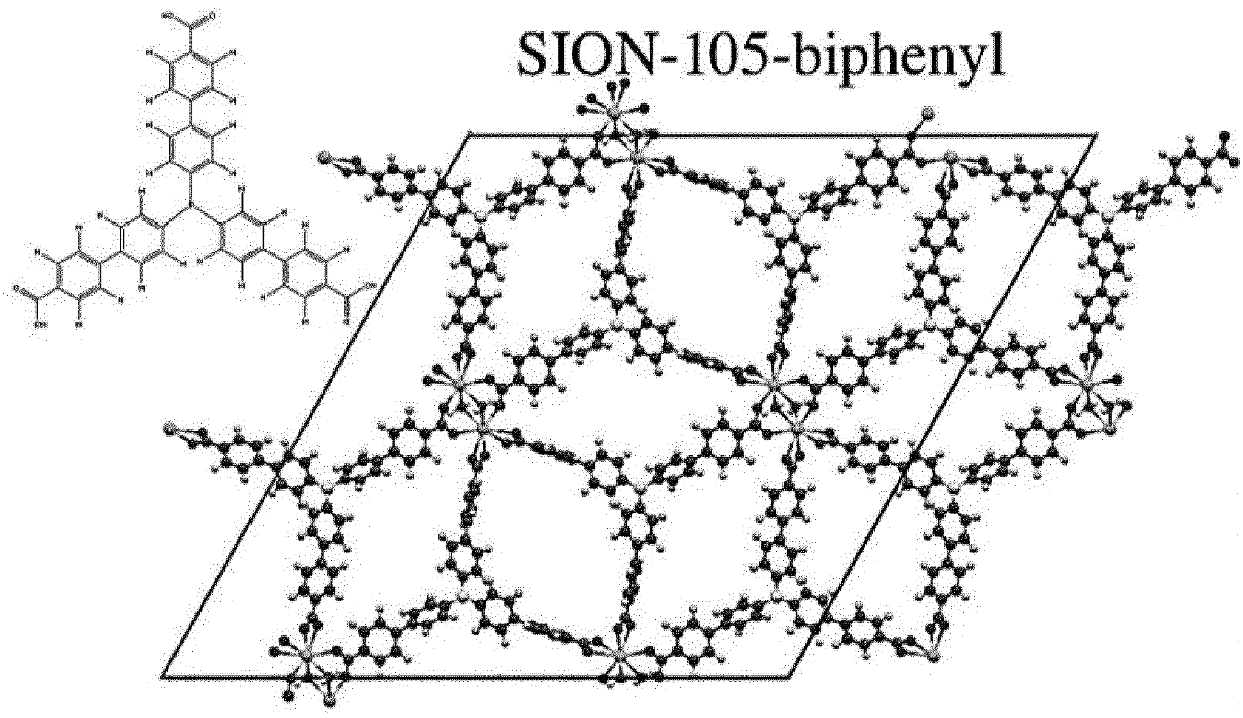


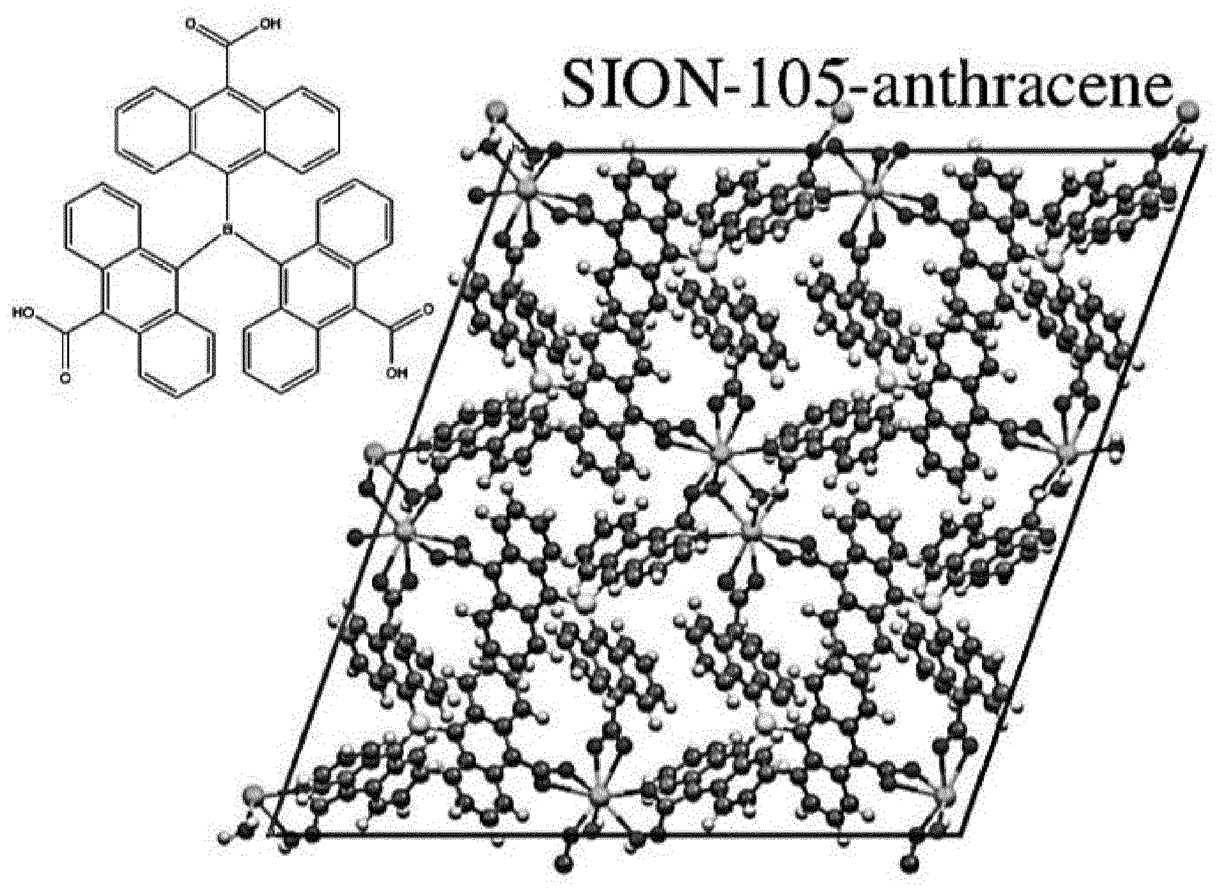

Europäisches Patentamt
European Patent Office
Office européen des brevets

# EUROPEAN SEARCH REPORT

Application Number
EP 18 18 5301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kyriakos C Stylianou ET AL: "Design and Synthesis of MOF-Sensors for the Detection of Excess Fluoride Levels in Drinking Water", https://az659834.vo.msecnd.net/eventsairseasiaprod/production-uoaevents-public/ad5aa30efed94e92b235ab601e54dab4, 13 July 2018 (2018-07-13), pages 1-1, XP055538007, Retrieved from the Internet: URL:https://az659834.vo.msecnd.net/eventsairseasiaprod/production-uoaevents-public/ad5aa30efed94e92b235ab601e54dab4 [retrieved on 2019-01-03] * the whole document * -& K C Stylianou: "Design and Synthesis of MOF-Sensors for the Detection of Excess Fluoride Levels in Drinking Water", https://az659834.vo.msecnd.net/eventsairseasiaprod/production-uoaevents-public/ad5aa30efed94e92b235ab601e54dab4, 13 July 2018 (2018-07-13), pages 1-1, XP055538008, Retrieved from the Internet: URL:https://az659834.vo.msecnd.net/eventsairseasiaprod/production-uoaevents-public/ad5aa30efed94e92b235ab601e54dab4 [retrieved on 2019-01-03] ----- | 1-15 | INV. C07F5/02 B01J20/22 G01N33/00 G01N21/00 G01N33/18 |

-/--

TECHNICAL FIELDS SEARCHED (IPC)

C07F
G01N
B01J

The present search report has been drawn up for all claims

1

| Place of search | Date of completion of the search | Examiner |
|---|---|---|
| The Hague | 10 January 2019 | Eberhard, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 18 18 5301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN LIU ET AL: "Porous and Robust Lanthanide Metal-Organoboron Frameworks as Water Tolerant Lewis Acid Catalysts", INORGANIC CHEMISTRY, vol. 52, no. 18, 16 September 2013 (2013-09-16), pages 10286-10291, XP055538009, EASTON, US ISSN: 0020-1669, DOI: 10.1021/ic400598x * figure 1 * * abstract * ----- | 1-13 | |
| X | SAMUEL G. DUNNING ET AL: "A Sensor for Trace H 2 O Detection in D 2 O", CHEM, vol. 2, no. 4, 1 April 2017 (2017-04-01), pages 579-589, XP055540106, ISSN: 2451-9294, DOI: 10.1016/j.chempr.2017.02.010 | 1-4,6-8, 10,13 | |
| Y | * abstract * * figure 1 * * reference 11 *; page 580, line 5 - line 9 ----- | 14,15 | TECHNICAL FIELDS SEARCHED (IPC) |
| Y | JING-MIN ZHOU ET AL: "Highly Selective Luminescent Sensing of Fluoride and Organic Small-Molecule Pollutants Based on Novel Lanthanide Metal-Organic Frameworks", INORGANIC CHEMISTRY, vol. 52, no. 14, 2 July 2013 (2013-07-02), pages 8082-8090, XP055539009, EASTON, US ISSN: 0020-1669, DOI: 10.1021/ic400770j * abstract * * paragraphs [Introduction], [Conclusions] * ----- | 14,15 | |

The present search report has been drawn up for all claims

1

| Place of search | Date of completion of the search | Examiner |
|---|---|---|
| The Hague | 10 January 2019 | Eberhard, Michael |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016162810 A


### Non-patent literature cited in the description


- **YAMAGUCHI et al.** *J. Am. Chem. Soc.,* 2001, vol. 123, 11372-11375
- **YANG et al.** *Anal. Chem.,* 2017, vol. 89, 1930-1936